Europäisches Patentamt

European Patent Office

Office européen des brevets

(19)

(11) Veröffentlichungsnummer: **0 212 247**
**A2**

(12) **EUROPÄISCHE PATENTANMELDUNG**

(21) Anmeldenummer: **86109655.0**

(22) Anmeldetag: **14.07.86**

(51) Int. Cl.⁴: **H 04 Q 9/14**

(30) Priorität: **26.07.85 DE 3526839**

(43) Veröffentlichungstag der Anmeldung: **04.03.87**
**Patentblatt 87/10**

(84) Benannte Vertragsstaaten: **AT CH DE FR GB IT LI NL SE**

(71) Anmelder: **MITEC Moderne Industrietechnik GmbH,**
**Daimlerstrasse 13, D-8012 Ottobrunn (DE)**

(72) Erfinder: **Mehnert, Walter, Dr., Dipl.-Ing., Grillparzer**
**Strasse 6, D-8012 Ottobrun (DE)**

(74) Vertreter: **Strasser, Wolfgang, Dipl.-Phys et al,**
**Patentanwälte Strohschänk, Uri & Strasser Innere**
**Wiener Strasse 8, D-8000 München 80 (DE)**

(54) **Messanordnung mit einer Vielzahl von Messeinheiten.**

(57) Die Meßeinheiten (5) einer Meßanordnung sind zu Gruppen (16 bis 22) mit jeweils einer Anwähleinheit (25) zusammengefaßt. Ein Kabel (1) in das die Meß- und Anwähleinheiten integriert sind, verbindet diese miteinander und mit einer Zentrale (2), die durch Aussenden von Adressensignalen die Anwähleinheiten einzeln aktiviert, so daß diese die Meßeinheiten ihrer Gruppe für den Empfang von Meßeinheiten-Adressensignalen der Zentrale vorbereiten. Die Adressensignale bestehen jeweils aus Impulsfolgen, die von programmierten Empfangsschaltungen dekodiert werden. Die Impulse für die Meßeinheiten unterscheiden sich von den Impulsen für die Anwähleinheiten durch ihre zeitliche Länge. Als Meßfühler (10) werden Stromquellen verwendet, die bei Anwahl ihrer Meßstelle an eine Spannungsversorgung angeschlossen werden und daraufhin in eine zur Zentrale führende Meßleitungsader (7) des Kabels einen mit der zu messenden Größe veränderlichen Meßstrom einprägen. Die Meß- und Anwähleinheiten umfassen Strombegrenzungs- und Pufferschaltungen (32), die Kurzschlußströme begrenzen und die Strombelastung des Kabels vergleichmäßigen. Signalformerschaltungen (30) in den Anwähleinheiten bereiten die Impulse auf und speisen sie in die nächsten Leitungsabschnitte ein.

0212247

- 3 -

von der Zentrale her zugeht, wird dann dieser vorgegebene
Binärwort von Meßeinheit zu Meßeinheit weitergeschoben.
Das Erscheinen des vorgegebenen Binärwertes an einem Ausgang des Flip-Flops einer Meßeinheit führt zum Schließen
der zugehörigen Schalteranordnung. Auf diese Weise werden
die Schalter der Meßeinheiten unter Kontrolle der Zentrale
der Reihe nach für den Zeitraum zwischen zwei Taktimpulsen
geschlossen und dann wieder geöffnet. Am Anfang eines jeden Kabelabschnittes befindet sich eine Anwähleinheit,
die von der Zentrale über eine eigene Kabelader mit Hilfe
eines kodierten Adressensignals aktiviert werden kann.
Im aktivierten Zustand sorgt die Anwähleinheit dann dafür, daß in das Schieberegister jedes Kabelabschnittes
der vorgegebene Binärwert eingespeist wird. Sowohl beim
Einschalten des Systems als auch während des Betriebs muß
sichergestellt werden, daß nur immer eine einzige Meßeinheit einen Meßwert erzeugt. Zu diesem Zweck ist sowohl
den Anwähleinheiten als auch den Meßeinheiten ein Rücksetzsignal zuführbar, mit dessen Hilfe vor jedem Meßzyklus
alle Anwähleinheiten desaktiviert und alle Meßeinheiten-
Flip-Flops in den Zustand zurückgesetzt werden, in dem
ihre zugehörige Schalteranordnung geöffnet ist. Diese
Rücksetzsignale werden von der Zentrale auf einer eigenen
Ader des Kabels an die im Kabel befindlichen Schaltungen
übertragen. Somit erfordert die bekannte Meßanordnung eine
vergleichsweise große Anzahl von Kabeladern und erlaubt
einen Zugriff zu den Meßeinheiten nur abschnittsweise.
Es können zwar die einzelnen Kabelabschnitte frei angewählt werden, doch ist der Zugriff zu einer bestimmten
Meßeinheit innerhalb eines Abschnittes nur in der Weise
möglich, daß zuerst alle vorausgehenden Meßeinheiten angewählt werden.

Demgegenüber liegt der Erfindung die Aufgabe zugrunde,
ein Meßsystem der eingangs genannten Art so weiterzubilden, daß bei einer möglichst geringen Anzahl von Kabeladern ein Optimum an Zugriffsmöglichkeit zu den Meßeinheiten sowie an Zuverlässigkeit erzielbar ist.

Zur Lösung dieser Aufgabe sieht die Erfindung die im
Anspruch 1 niedergelegten Merkmale vor.

Die Erfindung geht von der Erkenntnis aus, daß im Normalbetrieb die Meßeinheiten nach einem fest vorgegebenen
Schema der Reihe nach abgefragt, d.h. zum Schließen ihrer
Schalteranordnung veranlaßt werden. Nur in Sonderfällen,
wenn z.B. ein aus dem Rahmen fallender Meßwert auftritt,
der rasch durch eine erneute Messung überprüft werden
soll, ist es nötig, Zugriff zu einer speziellen Meßeinheit außerhalb der üblichen Reihenfolge nehmen zu können.

Es wird daher erfindungsgemäß jede einzelne Meßeinheit
mit einer eigenen Adresse ausgestattet, so daß sie von
der Zentrale her direkt angewählt werden kann. Ohne weitere Maßnahmen hätte dies allerdings vor allem bei umfangreichen Systemen die 50 000 Meßeinheiten und mehr
umfassen können, zur Folge, daß entsprechend komplexe
Adressensignale nacheinander erzeugt und ausgesandt werden müßten, um einen einzelnen Meßzyklus zu durchlaufen.
Dies würde die für einen Meßzyklus benötigte Zeitdauer
außerordentlich steigern. Daher ist gemäß der Erfindung
zusätzlich eine Art "Verschachtelung" der Adressen der
Meßeinheiten vorgesehen, die darin besteht, daß das Adressensignal einer n-ten Meßeinheit aus dem Adressensignal
der (n-1)-ten, d.h. der unmittelbar vorher angewählten
Meßeinheit und einem zeitlich nach diesem Adressensignal
der (n-1)-ten Meßeinheit erzeugten Zusatzsignal besteht. Da
dies für alle Meßeinheiten gilt, müssen also zur Anwahl
der n-ten Meßeinheit und aller vorausgehenden Meßeinheiten
nur das Adressensignal der ersten Meßeinheit und n-1 Zusatzsignale erzeugt werden. Da diese Zusatzsignale vor-

- 5 -

zugsweise jeweils nur aus einem einzigen Spannungsimpuls
bestehen, können sie sehr rasch hintereinander erzeugt
und ausgesandt werden. Dabei kann durch jedes Zusatzsignal eine Meßeinheit desaktiviert und die nächste zur
Erzeugung eines Meßwertes veranlaßt werden. Wenn auf diese Weise das Adressensignal für die Meßeinheit mit der
höchsten oder längsten Adresse ausgesandt worden ist,
sind somit auch alle vorausgehenden Meßeinheiten abgefragt worden und es ist ein kompletter Meßzyklus abgeschlossen. Die hierfür benötigte Zeit ist sehr nahe am
absoluten Minimum, da nach Durchführung eines Meßvorganges ohne Zeitverlust und vorzugsweise unmittelbar
anschließend die jeweils nächste Meßeinheit angewählt
wird. Dennoch bleibt jede Meßeinheit auch einzeln frei
anwählbar, da sie eine eigene Adresse besitzt und ein
Adressensignal für eine Meßeinheit so erzeugt
und ausgesandt werden kann, daß den vorausgehenden Meßeinheiten keine Zeit für die Durchführung eines vollständigen Meßvorganges bleibt.

Dadurch, daß die Meßeinheiten untereinander nicht nach
Art eines Schieberegisters gekoppelt sind, entfällt die
hierfür nach dem Stand der Technik benötigt Kabelader.
Da weiterhin nicht nur die Adressensignale sondern auch
die Rücksetz- bzw. Setzsignale sowohl für die Meßeinheiten
als auch für eventuell vorhandene Anwähleinheiten über
ein und dieselbe Kabelader gesandt werden können, ergibt
sich bei der erfindungsgemäßen Struktur eines Meßsystems
eine außerordentlich geringe Anzahl von Kabeladern. Vorteilhafte Weiterbildungen des erfindungsgemäßen Meßsystems
sind in den Unteransprüchen niedergelegt.

Die Erfindung wird im folgenden anhand von Ausführungsbeispielen unter Bezugnahme auf die Zeichnung beschrieben;
in dieser zeigt:

Fig. 1        eine schematische Darstellung der einfachsten Ausführungsform einer erfindungsgemäßen
Meßanordnung,

Fig. 2        eine schematische Darstellung einer komplexeren Ausführungsform, bei der mit Hilfe von
Anwähleinheiten von einem Hauptstrang Seitenstränge abgezweigt sind, die jeweils eine
Meßeinheiten-Gruppe bilden,

Fig. 3        eine schematische Darstellung einer noch
komplexeren Ausführungsform der erfindungsgemäßen Anordnung, bei der auch die Meßeinheiten des Hauptstranges des Kabels mit Hilfe
von Anwähleinheiten in Gruppen unterteilt sind,

Fig. 4        eine erste Ausführungsform einer erfindungsgemäßen Meßeinheit,

Fig. 5        eine zweite Ausführungsform einer erfindungsgemäßen Meßeinheit,

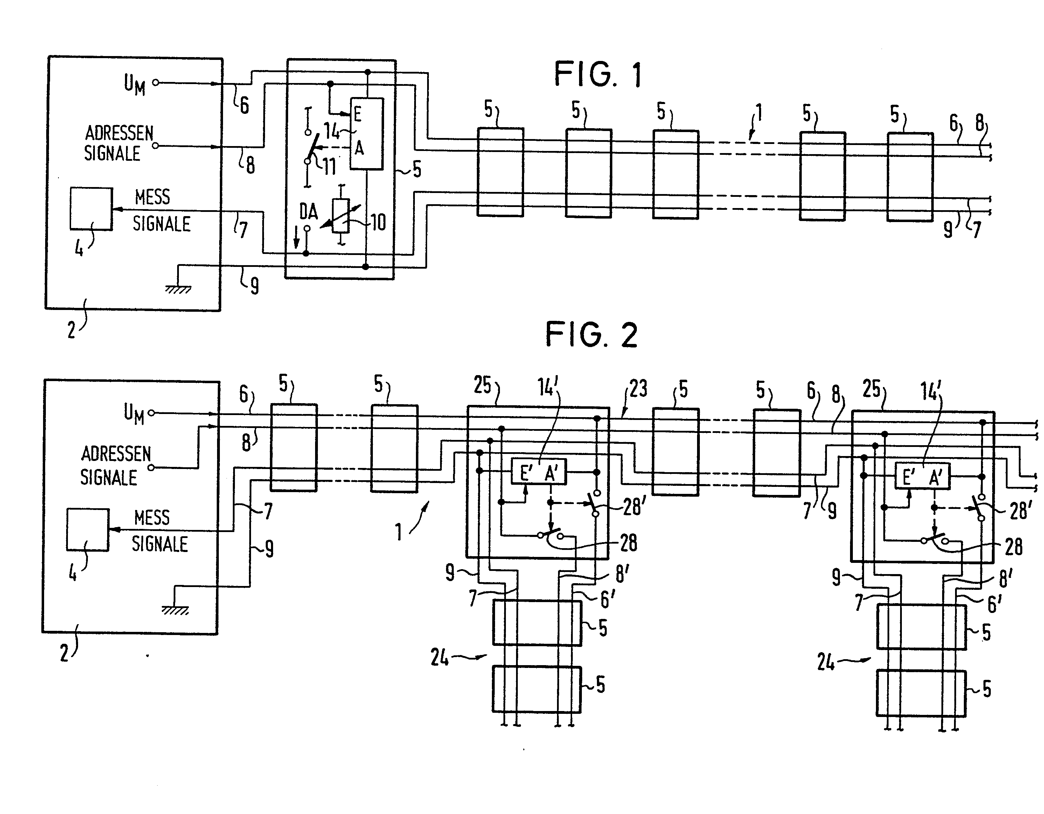

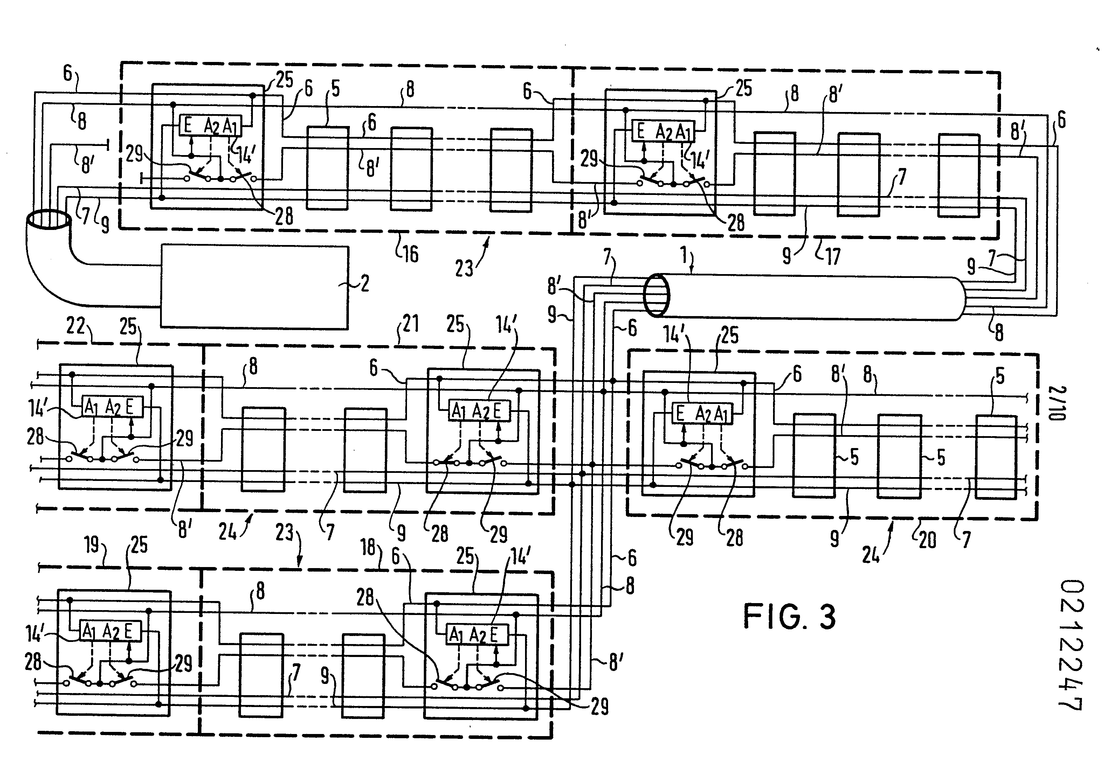

Fig. 6        eine schematische Darstellung einer Gruppe
von Meßeinheiten mit der zugehörigen Anwähleinheit in einer gegenüber den Gruppen in den
Fig. 2 und 3 etwas modifizierten Ausführungsform,

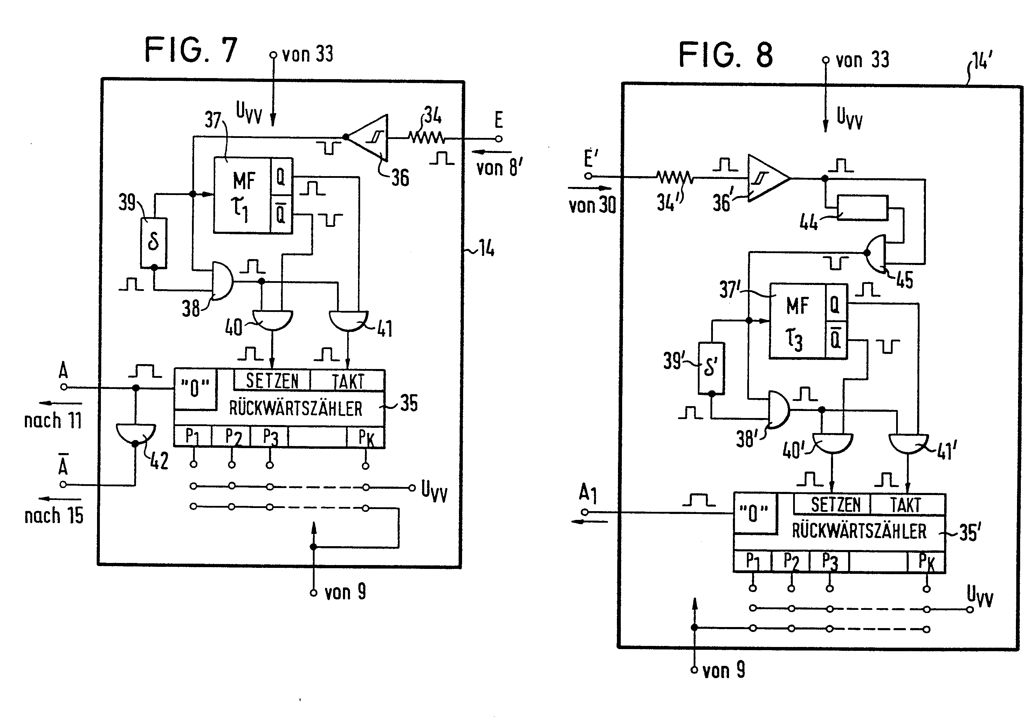

Fig. 7        die schematische Darstellung einer Steuerschaltung, wie sie in den Meßeinheiten zum
Empfang der Adressensignale und Schließen und
Öffnen der Schalter Verwendung finden kann,

Fig. 8      die schematische Darstellung einer Steuerschaltung, wie sie in den Anwähleinheiten zum Empfang der Adressensignale und zum Öffnen und Schließen der Schalter Verwendung finden kann,

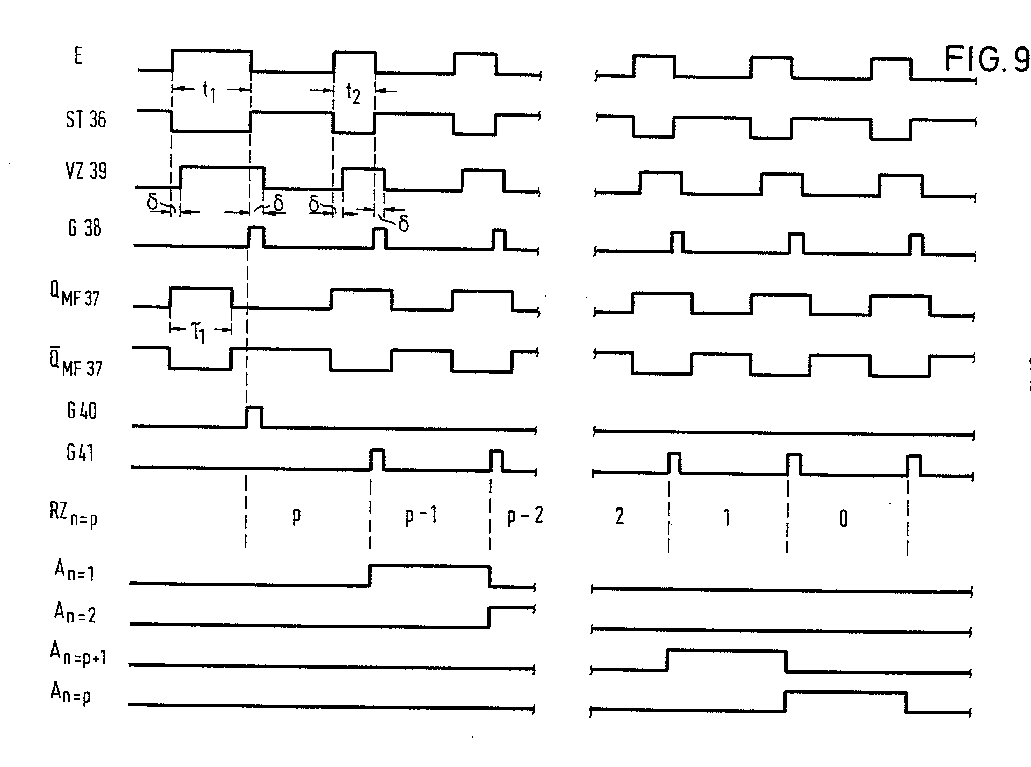

Fig. 9      ein Impulsdiagramm zur Veranschaulichung der Funktionsweise der Steuerschaltung aus Fig. 7,

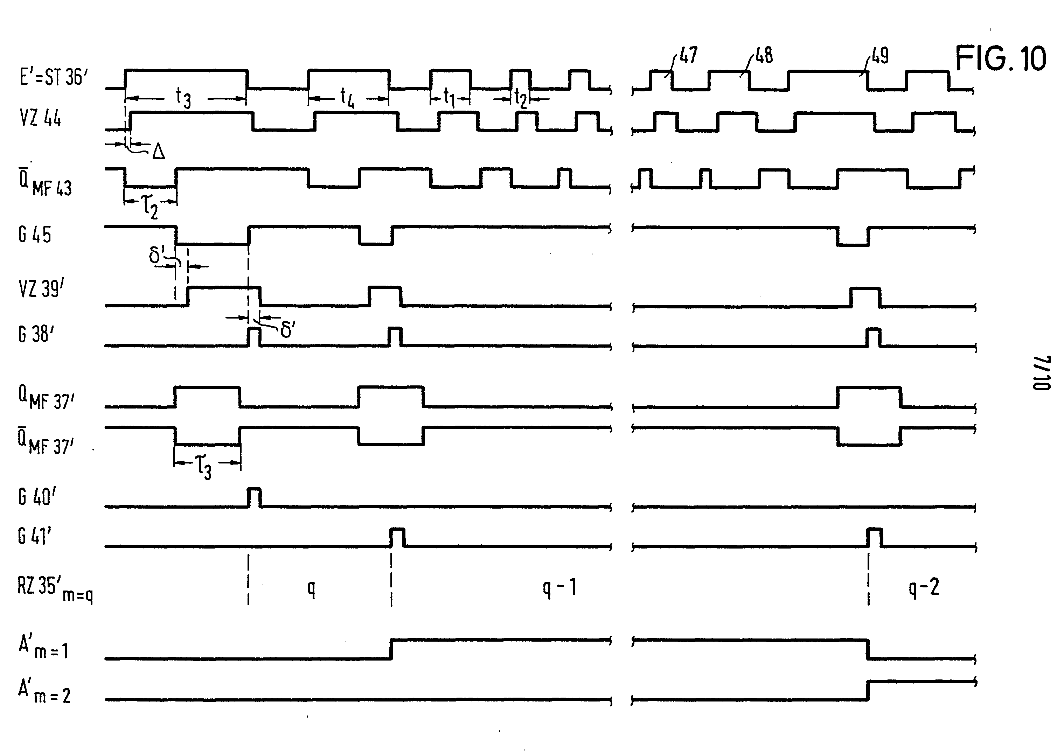

Fig. 10      ein Impulsdiagramm zur Veranschaulichung der Funktionsweise der Steuerschaltung in Fig. 8,

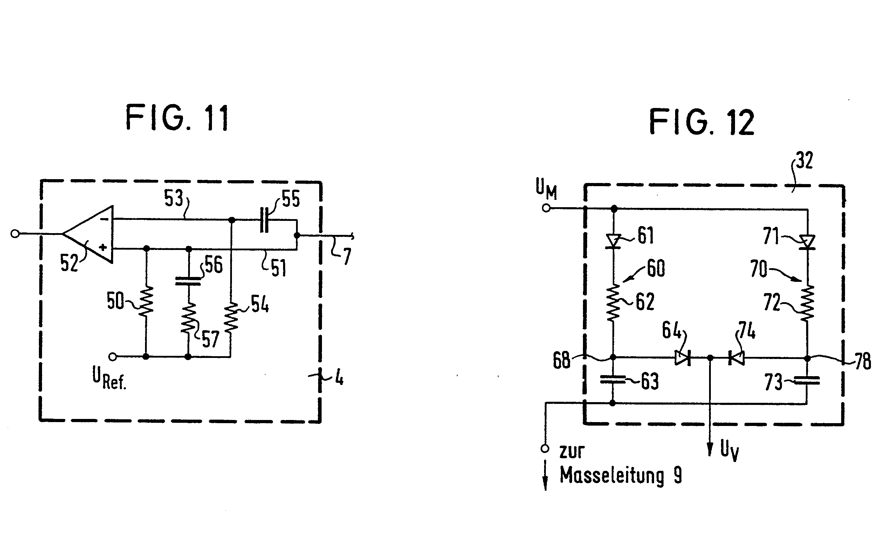

Fig. 11      eine Empfangsschaltung wie sie in der Zentrale zum Empfang und zur Verstärkung der von den Meßeinheiten kommenden Meßsignale Verwendung finden kann,

Fig. 12      eine erste Ausführungsform einer Strombegrenzungs- und Pufferschaltung, wie sie in der Stromversorgung einer jeden Meßeinheit und einer jeden Anwähleinheit Verwendung finden kann,

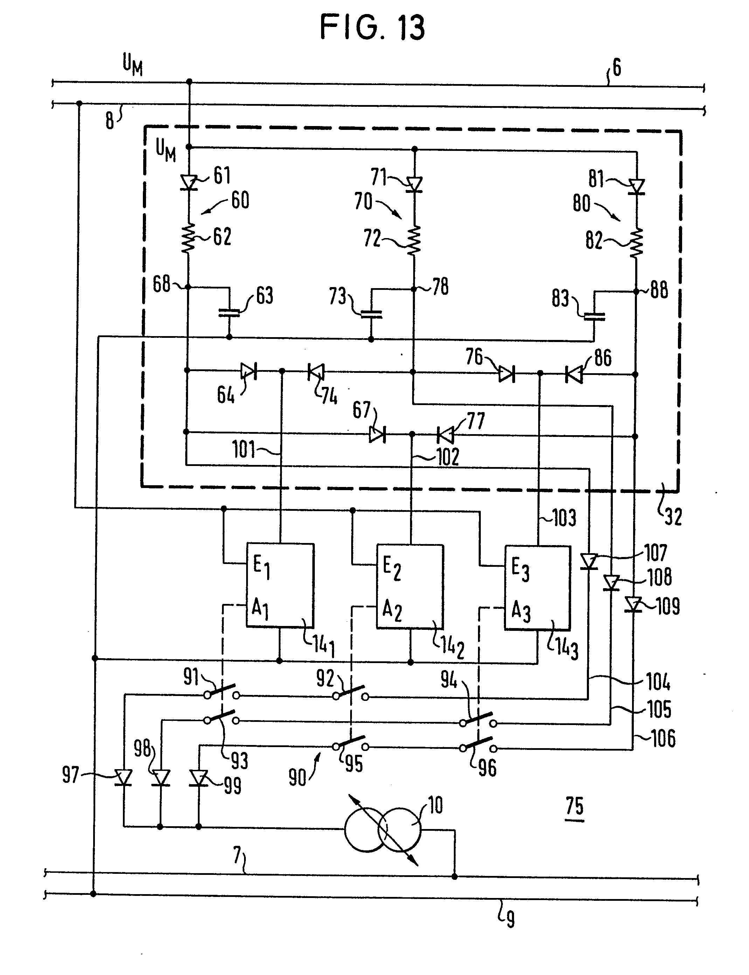

Fig. 13      eine weitere Ausführungsform einer Meßeinheit, die für besonders hohe Zuverlässigkeits-Anforderungen ausgelegt ist,

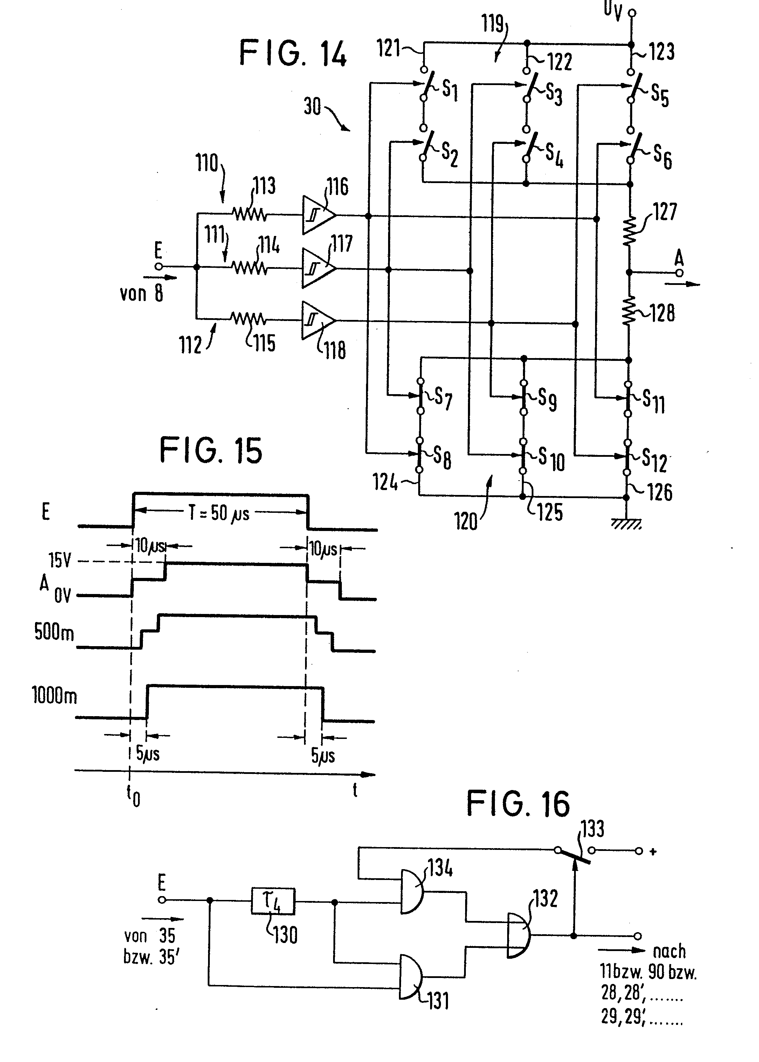

Fig. 14      eine Signalformerschaltung zur Regenerierung der Adressensignale,

Fig. 15      ein Impulsdiagramm zur Erläuterung der Ausbreitung der Adressensignale auf den Befehlsleitung-Abschnitten, und

0212247

Fig. 16    eine Verzögerungsschaltung, wie sie zwischen
           dem Ausgang einer jeden Steuerschaltung in
           den Meßeinheiten und den Anwähleinheiten und
           dem oder den jeweils nachfolgenden Schaltern
           verwendet werden kann.

In Fig. 1 ist die einfachste Ausführungsform einer erfindungsgemäßen Meßanordnung dargestellt, bei der ein
vieradriges Kabel 1 eine Vielzahl von Meßeinheiten 5
miteinander und mit einer Zentrale 2 verbindet, von der
aus die Meßeinheiten 5 einzeln ansteuerbar sind. Eine
solche Anordnung ist für kleine Systeme mit maximal
einigen tausend Meßstellen geeignet, die vorzugsweise
in das Kabel integriert, d.h. von der Kabelhülle umschlossen und gegen schädigende Umwelteinflüsse geschützt
sind.

Von den vier Adern des Kabels 1 dient eine Ader 6 als
Spannungs-Versorgungsleitung dazu, den Meßeinheiten 5
von der Zentrale 2 her eine Versorgungsspannung $U_M$ zuzuführen, während eine Ader 9 als Masseleitung dient,
die die Meßeinheiten mit der Systemmasse in der Zentrale
2 verbindet.

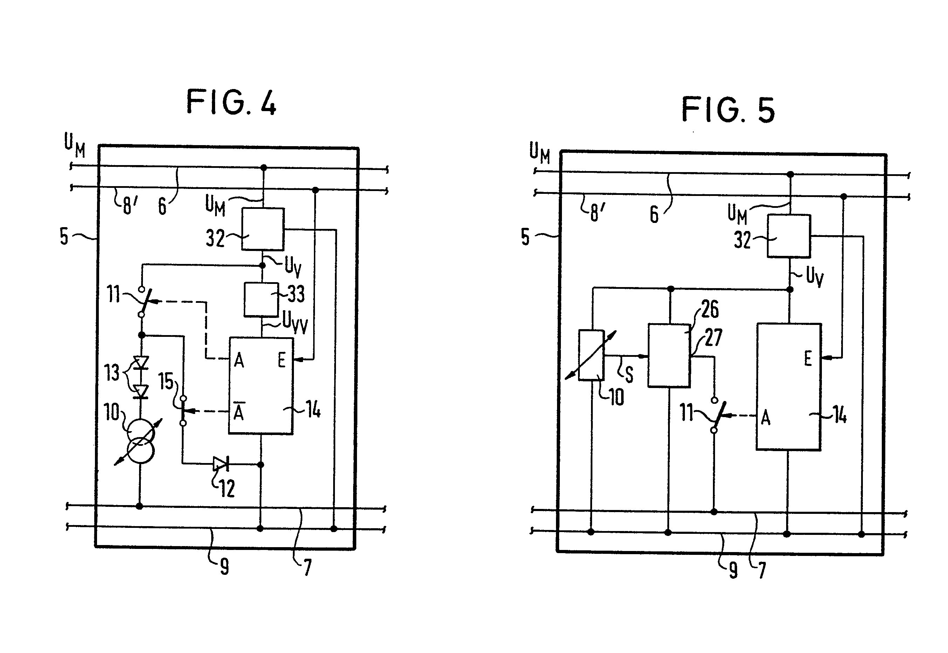

Jede Meßeinheit 5 umfaßt zumindest einen Meßfühler 10,
einen Schalter 11 und eine Steuerschaltung 14. Da diese
Bestandteile einer jeden Meßeinheit 5 je nach Ausführungsform in unterschiedlicher Weise miteinander verbunden sein können, sind sie in Fig. 1 nur schematisch
nebeneinander in der ersten Meßeinheit 5 wiedergegeben.
Verschiedene bevorzugte Ausführungsformen solcher Meßeinheiten 5 werden weiter unten     unter Bezugnahme auf
die Fig. 4, 5, 6 und 13 genauer erläutert.

Gemeinsam ist allen diesen Ausführungsformen, daß jede
Steuerschaltung 14 eine programmierbare Adressen- Erkennungsschaltung umfaßt, die über einem Befehlseingang E mit
einer Ader 8 des Kabels 1 verbunden ist. Auf dieser als
Befehlsleitung dienenden Ader 8 sendet die Zentrale 2
Meßeinheiten-Adressensignale aus, die von den programmierbaren Adressen-Erkennungsschaltungen empfangen und dekodiert werden. Bei dem in Fig. 1 dargestellten Ausführungsbeispiel ist die Adressen-Erkennungsschaltung einer jeden
Meßeinheit 5 auf eine andere Adresse programmiert. Stimmt
ein von der Zentrale 2 ausgesandtes Meßeinheiten-Adressensignal mit der programmierten Adresse einer bestimmten
Meßeinheit 5 überein, so erzeugt die Steuerschaltung 14
dieser Meßeinheit an ihrem Ausgang A ein Signal, durch
das der Schalter 11, der im Ruhezustand geöffnet ist, für
einen vorgegebenen Zeitraum geschlossen und dann wieder
geöffnet wird. Dies ist durch die gestrichelte Pfeillinie vom Ausgang A zum Schalter 11 angedeutet.

Der Schalter 11 ist in den Figuren zwar immer als mechanischer Schalter dargestellt, doch werden vorzugsweise
elektronische Schalter verwendet. Dies wird weiter unten
genauer erläutert.

Als Meßfühler 10 können die verschiedensten Sensoren
Verwendung finden, die ein elektrisches Ausgangssignal erzeugen, das
in Abhängigkeit von einem Umgebungsparameter wie z.B. der
Temperatur, der Helligkeit oder der Feuchte seinen Wert
ändert. Durch das Schließen des Schalters 11 wird entweder dieses elektrische Ausgangssignal selbst oder ein
anderes, die Größe des Ausgangssignals kennzeichnendes
elektrisches Signal als Meßsignal an den Datenausgang DA
der betreffenden Meßeinheit gelegt. Dieser Datenausgang
DA ist über eine Ader 7, die als Meßleitung Verwendung
findet, mit der Zentrale 2 verbunden, in der das von der jeweils angesteuerten Meßeinheit kommende Meßsignal mit Hilfe einer Eingangsschaltung 4 empfangen, verstärkt und einer weiteren Auswertung zugeführt wird. Eine besonders bevorzugte Ausführungsform einer solchen Eingangsschaltung 4 wird weiter unten unter Bezugnahme auf Fig. 11 erläutert.

Da die Meßleitung 7 nur von einer einzigen Ader des Kabels 1 gebildet wird, auf der nicht mehrere Meßsignale gleichzeitig zur Zentrale 2 übertragen werden können, werden die Meßeinheiten 5 einzeln angesteuert, so daß immer nur einer der Schalter 11 geschlossen ist. Ist das Meßsignal einer angesteuerten Meßeinheit 5 in der Zentrale 2 erfaßt, so kann der betreffende Schalter 11 wieder geöffnet und eine andere Meßeinheit 5 zum Schließen ihres Schalters 11 angesteuert werden.

Im Regelfall arbeitet ein derartiges Meßsystem zyklisch, d.h. es werden beginnend mit einer ersten Meßeinheit die Meßeinheiten 5 der Reihe nach zum Schließen des jeweiligen Schalters 11 angesteuert, bis von jeder Meßeinheit ein aktueller Meßwert erfaßt und somit ein vollständiger Meßzyklus abgeschlossen worden ist. Hierauf kann sich dann unmittelbar oder nach einer vorgegebenen Pause ein neuer Meßzyklus anschließen.

Bei der Durchführung eines solchen Meßzyklus ist es zwar zweckmäßig, daß die Zentrale 2 zu jedem Zeitpunkt genau "weiß", von welcher Meßeinheit der momentan erfaßte Meßwert stammt, doch ist ein absolut wahlfreier Zugriff zu jeder beliebigen Meßeinheit zu jedem beliebigen Zeitpunkt nicht erforderlich.

Erfindungsgemäß sind daher die Adressensignale für die Meßeinheiten 5 so strukturiert, daß das Adressensignal der in der Anwählreihenfolge n-ten Meßeinheit aus dem

- 11 -

Adressensignal der vorausgehenden, d.h. der (n-1)-ten Meßeinheit und einem Zusatzsignal besteht, und seinerseits dadurch das Adressensignal der (n+1)-ten Meßeinheit ergibt, daß ihm ein weiteres Zusatzsignal hinzugefügt wird.

Zum Durchlaufen eines Meßzyklus muß die Zentrale also nur das Adressensignal der in der Anwählreihenfolge letzten Meßeinheit über die Befehlsleitung 8 abgeben, da dieses Adressensignal die Adressensignale aller anderen Meßeinheiten umfaßt. Auf diese Weise werden beim Durchlaufen eines Meßzyklus alle Meßeinheiten 5 in einer durch ihre Programmierung vorgegebenen Reihenfolge zum Schließen ihres jeweiligen Schalters 11 angewählt.

Trotz dieser für den "Normalfall" gedachten strengen Anwahl-Reihenfolge ist es auch bei einem erfindungsgemäßen Meßsystem möglich, einzelne Meßeinheiten 5 frei, d.h. ohne vorausgehende Anwahl anderer Meßeinheiten unmittelbar dadurch anzuwählen, daß das Adressensignal der Meßeinheit, die in der Anwahl-Reihenfolge der gewünschten Meßeinheit vorausgeht, so schnell erzeugt und ausgesendet wird, daß allen der gewünschten Meßeinheit vorausgehenden Meßeinheiten nicht genügend Zeit zum Schließen ihrer Schalter 11 bleibt, sie also gleichsam übersprungen werden. Erst das Zusatzsignal, das aus dem Adressensignal der unmittelbar vorausgehenden Meßeinheit das Adressensignal der gewünschten Meßeinheit macht, wird mit einer zeitlichen Länge erzeugt und ausgesandt, die der gewünschten Meßeinheit die Abgabe eines Meßsignals an die Zentrale 2 ermöglicht.

Wesentlich ist, daß durch die erfindungsgemäße Struktur
der Meßeinheiten-Adressensignale und Adressen-,Erkennungsschaltungen eine genau definierte Anwahl der Meßeinheiten
von der Zentrale 2 her mit Hilfe einer einzigen Ader,
nämlich der Befehlsleitung 8 des Kabels 1 möglich ist.
Insgesamt ergibt sich auf diese Weise ein minimaler Verdrahtungsaufwand zum Verbinden sämtlicher Meßeinheiten
5 mit der Zentrale 2, da hierfür nur ein einziges Kabel
mit insgesamt vier Adern erforderlich ist. In diesem Zusammenhang sei ausdrücklich darauf hingewiesen, daß in
der Fig. 1 wie auch in den anderen entsprechenden Figuren
sämtliche Adern des Kabels einschließlich der Spannungs-
Versorgungsleitung 6 und der Masseleitung 9 dargestellt
sind. Es wird hier also eine optimale Zugriffsmöglichkeit
zu den einzelnen Meßeinheiten bei gleichzeitig minimalen
Verdrahtungsaufwand erzielt.

In Fig. 2 ist eine etwas komplexere Meßanordnung dargestellt, bei der ein Hauptstrang 23 des Kabels 1 neben
einer Vielzahl von Meßeinheiten 5 eine Reihe von Anwähleinheiten 25 umfaßt, die durch den Hauptstrang 23 ebenso wie die Meßeinheiten 5 miteinander und mit der Zentrale 2 verbunden sind.

Die Meßeinheiten 5 sind hier ebenso aufgebaut wie die
Meßeinheiten 5 aus Fig. 1 und sind daher nur noch als
rechteckige Blöcke dargestellt.

An jeder Anwähleinheit 25 ist vom Hauptstrang 23 des Kabels 1 ein Seitenstrang 24 abgezweigt, der seinerseits
nur Meßeinheiten 5 umfaßt. Es handelt sich hierbei um
ein Meßsystem mittlerer Größe, bei dem sowohl im Hauptstrang 23 als auch in den Seitensträngen 24 jeweils maximal einige tausend Meßeinheiten 5 vorgesehen sind.

mit der Befehlsleitung 8 des Hauptstranges 23 verbunden ist. Auf dieser Befehlsleitung 8 sendet die Zentrale 2 nicht nur die Meßeinheiten-Adressensignale sondern auch die Anwähleinheiten-Adressensignale aus, die sich von den Meßeinheiten-Adressensignalen in eindeutiger Weise unterscheiden, wie dies weiter unten näher erläutert wird. Dadurch können Meßeinheiten 5 und Anwähleinheiten 25 gleiche Adressen besitzen.

Stimmt ein von der Zentrale 2 ausgesandtes Anwähleinheiten-Adressensignal mit der programmierten Adresse einer bestimmten Anwähleinheit 25 überein, so erzeugt die Steuerschaltung 14' dieser Anwähleinheit an ihrem Ausgang A' ein Signal, durch das die Schalter 28, 28' solange geschlossen werden, bis die Zentrale 2 durch Erzeugung der entsprechenden Meßeinheiten-Adressensignale einzelne oder alle Meßeinheiten 5 des betreffenden Seitenstranges 24 zum Schließen und Wiederöffnen ihrer Schalter 11 angesteuert hat.

Danach werden durch das Aussenden des nächsten Anwähleinheiten-Adressensignals die Schalter 28, 28' der bisher angewählten Anwähleinheit 25 geöffnet und die Schalter 28, 28' einer anderen Anwähleinheit geschlossen, so daß die Meßeinheiten eines anderen Seitenstranges 24 zunächst durch ein über die Befehlsleitungen 8, 8' ausgesandtes Setzsignal zum Erkennen der Meßeinheiten-Adressensignale vorbereitet und dann mit Hilfe derselben Meßeinheiten-Adressensignale angewählt werden können, die auch zum Anwählen der Meßeinheiten des zuvor aktivierten Seitenstranges verwendet wurden.

Da die Adressen der Seitenstrang-Meßeinheiten von denen der Hauptstrang-Meßeinheiten verschieden sind, werden durch diese Adressensignale die Meßeinheiten des Hauptstrangs 23 nicht angewählt. Sind die Meßeinheiten aller
Seitenstränge abgefragt, sendet die Zentrale 2 die Meßeinheiten-Adressensignale p + 1 bis p + q aus, durch die
Meßeinheiten des Hauptstranges 23 der Reihe nach abgefragt werden, ohne daß es hierdurch zur Abfrage einer
Meßeinheit eines Seitenstranges kommen könnte.

Auch die Adressensignale für die Anwähleinheiten 25
sind so strukturiert, daß das Adressensignal der in der
Anwählreihenfolge m-ten Anwähleinheit aus dem Adressensignal der vorausgehenden (m-1)-ten Anwähleinheit und
einem Zusatzsignal besteht und seinerseits dadurch das
Adressensignal der (m+1)-ten Anwähleinheit ergibt, daß
ihm ein weiteres Zusatzsignal hinzugefügt wird.

Zum Durchführen eines Systemzykluses gibt die Zentrale
2 also das Anwähleinheiten-Adressensignal der in der
Anwählreihenfolge letzten Anwähleinheit 25 über die
Befehlsleitung 8 ab, das die Adressensignale aller anderen Anwähleinheiten umfaßt. Dabei werden, wie bereits erwähnt, zwischen dem Weiterschalten von einer Anwähleinheit zur nächsten jeweils die Meßstellen-Adressensignale
abgegeben, die zum Anwählen der Meßstellen 5 des betreffenden Seitenstranges erforderlich sind. Beim Durchlaufen eines Systemzykluses werden alle Anwähleinheiten
25 in einer durch ihre Programmierung vorgegebenen Reihenfolge zum Schließen ihrer jeweiligen Schalter 28,
28' angesteuert.

Auch bei den Anwähleinheiten 25 ist es möglich, durch
ein entsprechend schnelles Aussenden des Adressensignals einer gewünschten Anwähleinheit 25 alle vorausgehen-Dies ergibt die Möglichkeit die Gruppen-Befehlsleitung 8'
einer Gruppe, beispielsweise der Gruppe 18, auch dann noch
mit der System-Befehlsleitung 8 verbinden zu können, wenn
sich der Schalter 28 der primär zugeordneten Anwähleinheit
25 nicht mehr schließen läßt. In einem solchen Fall sendet
die Zentrale statt des Anwähleinheiten-Adressensignals der
defekten primär zugeordneten Anwähleinheit 25 ein modifiziertes Adressensignal für die sekundär zugeordnete Nachbar-
Anwähleinheit 25 aus. Diese schließt dann aufgrund der
Modifikation des empfangenen Adressensignals nicht den
Schalter 28 für die ihr primär zugeordnete Gruppe 19 sondern den Schalter 29 für die sekundär zugeordnete Gruppe 18,
deren Meßeinheiten 5 dann wieder die von der Zentrale 2
ausgesandten Meßeinheiten-Adressensignale empfangen und
verarbeiten können. Erhält die Nachbar-Anwähleinheit ihr
Adressensignal in unmodifizierter Form, so schließt sie
nicht den Schalter 29 für die sekundär zugeordnete Gruppe 18
sondern den Schalter 28 für die primär zugeordnete Gruppe 19,
deren Meßeinheiten 5 dann in der üblichen Weise von der
Zentrale 2 angewählt werden können.

Durch diese Zuordnung einer jeden Anwähleinheit 25 zu jeweils
wenigstens zwei Gruppen wird die Betriebssicherheit des
Gesamtsystems wesentlich erhöht, weil von den zwei Schaltern
28 bzw. 29, über die die Gruppen-Befehlsleitung 8' einer
jeden Gruppe 16, 18 und 21 mit der System-Befehlsleitung 8
verbindbar ist, beide ausfallen müssen, damit die betreffende
Gruppe nicht mehr angewählt werden kann. Bei der Gruppe 17
müssen außer dem Schalter 28 der primär zugeordneten Anwähleinheit 25 sogar drei weitere Schalter, nämlich die Schalter
29 der Anwähleinheiten der Gruppen 18, 20 und 21 ausfallen,
damit die Meßeinheiten 5 der Gruppe 17 von der Zentrale 2
endgültig nicht mehr erreicht werden können.

Umfaßt jede Anwähleinheit 25 mehrere "primäre" Schalter, die gleichzeitig mit dem Schalter 28 betätigt werden, um mehrere Gruppenleitungen mit durchgehenden Systemleitungen zu verbinden bzw. von diesen zu trennen, so ist es zweckmäßig, für jeden dieser "primären" Schalter einen weiteren "sekundären" Schalter vorzusehen, der dann gleichzeitig mit dem weiteren Schalter 29 betätigbar ist.

Es sei darauf hingewiesen, daß sowohl die Meßeinheiten 5 als auch die Anwähleinheiten 25 so klein ausgebildet werden können, daß sie völlig in das Kabel 1 integriert, d.h. innerhalb der Kabelhülle angeordnet und mit den Kabeladern 6, 7, 8, 8', 9 verbunden sind. Dabei können die Meßstellen 5 trotz der Unterteilung in Gruppen völlig gleichmäßig über die Länge des Kabels 1 verteilt werden, so daß insbesondere auch die Kabelabschnitte, die in Fig. 3 in geschlossener Form dargestellt sind, weitere Meßeinheiten oder Gruppen von Meßeinheiten enthalten können.

In Fig. 4 ist eine erste, besonders bevorzugte konkrete Ausführungsform einer Meßeinheit 5 dargestellt, wie sie in jeder der in den Fig. 1 bis 3 wiedergegebenen Meßanordnungen zur Überwachung der Umgebungstemperatur entlang des Kabels 1 Verwendung finden kann. Bei dieser Ausführungsform ist der Meßfühler 10 als temperaturempfindliche Stromquelle ausgebildet, die einerseits direkt mit der Meßleitung 7 und andererseits über zwei Dioden 12, 13 mit dem Schalter 11 verbunden ist. Wird der Schalter 11 durch ein Signal der Steuerschaltung 14 geschlossen, so legt er über die Dioden 12, 13 an den Meßfühler 10 eine Versorgungsspannung $U_V$ an, die vom Spannungs-Ausgang einer Strombegrenzungs- und Pufferschaltung 3 geliefert wird, die ihrerseits ihre Versorgungsspannung $U_M$ über die Ader 6 des Kabels 1 von der Zentrale 2 erhält. Aufbau und Funktion dieser Strombegrenzungs- und Pufferschaltung 32 werden weiter unten unter Bezugnahme auf die Fig. 12 und 13 noch genauer erläutert.

Wird durch Schließen des Schalters 11 die Versorungsspannung $U_V$ an die den Meßfühler 10 bildende temperaturempfindliche Stromquelle angelegt, so prägt sie in die Meßleitung 7 des Kabels 1 einen Strom ein, dessen Größe ein Maß für die Umgebungstemperatur des Meßfühlers 10 darstellt. Dieser Strom wird über die Meßleitung 7 als Meßsignal der Empfangsschaltung 4 der Zentrale 2 zugeführt und dort gemessen und ausgewertet, wie dies weiter unten unter Bezugnahme auf Fig. 11 noch genauer beschrieben wird.

Temperaturabhängige Stromquellen der hier verwendeten Art sind unter der Bezeichnung AD 590 der Firma Analog Devices im Handel erhältlich und besitzen beispielsweise eine Empfindlichkeit von 1 $\mu$A/K. Ihre Verwendung ist dem Einsatz von Thermistoren aus zwei Gründen vorzuziehen: Einerseits ist es bei einer räumlich weit ausgedehnten Meßanordnung nicht möglich, den Strom zu messen, der durch einen Thermistor bei einer angelegten definierten Meßspannung fließt, weil diese Spannung zu starken Störungseinflüssen unterworfen sein kann. Stattdessen muß hier in einen Thermistor von der Zentrale her ein definierter Meßstrom eingeprägt und zur Meßwerterfassung die hierfür erforderliche Spannung in der Zentrale 2 gemessen werden. Um den Einprägestrom den Meßfühlern zuführen zu können, wird eine eigene Ader im Kabel 1 benötigt. Diese Ader kann in dem erfindungsgemäß bevorzugten Fall der Verwendung von temperaturabhängigen Stromquellen als Meßfühler 10 weggelassen werden, da diese Stromquellen lediglich mit der Versorgungsspannung verbunden werden müssen, um einen Meßwert abzugeben. Zum anderen hat eine Stromeinprägung von der Zentrale 2 her den Nachteil, daß dann, wenn an einer einzigen Meßeinheit ein Kurzschluß oder ein Strom-Leck auftritt, an dem jeweils gerade aktivierten Meßfühler der Meßstrom nur noch teilweise oder überhaupt nicht mehr ankommt, was in jedem Fall zu einem unrichtigen Meßergebnis führt. Zwar kann man zur Vermeidung dieser Fehlerquelle dem an jeder Meßeinheit vorhandenen Eingang für den Einprägestrom einen Schutzwiderstand vorschalten; dieser Schutzwiderstand liegt aber bei geschlossenem Schalter 11 mit dem Thermistor in Reihe und beeinträchtigt damit die Genauigkeit und Empfindlichkeit der angestrebten Temperaturmessung erheblich.

Die zur Betätigung des Schalters 11 dienende Steuerschaltung 14 ist zur Strom- und Spannungsversorgung einerseits an die Masseleitung 9 und andererseits über einen Gleichspannungs/ Gleichspannungswandler bzw. Gleichspannungsregler 33 an den Spannungsausgang der Strombegrenzungs- und Pufferschaltung 32 angeschlossen. Der Gleichspannungsregler 33, der als integrierter Baustein in Chipform verwendet wird, erzeugt aus der von der Strombegrenzungs- und Pufferschaltung 32 abgegebenen Gleichspannung $U_V$ eine wesentlich niedrigere Gleichspannung $U_{VV}$ für die Bauelemente der weiter unten unter Bezugnahme auf Fig. 7 genauer beschriebenen Steuerschaltung 14. Diese Anordnung bietet den Vorteil, daß die Steuerschaltung 14 mit einer wesentlich geringeren Stromaufnahme betrieben werden kann, als dies der Fall wäre, wenn sie an die für den Meßfühler 10 benötigte höhere Gleichspannung $U_V$ angeschlossen wäre.

Als Schalter 11 werden vorzugsweise Halbleiterschalter verwendet, deren Versorgungsspannung jedoch vom Ausgang der Strombegrenzungs- und Pufferschaltung 32 abgegriffen werden muß, da es an einem Halbleiterschalter zu Beschädigungen bzw. zur Zerstörung kommt, wenn die geschaltete Spannung größer als die Versorgungsspannung ist. Auch verhindert die Strombegrenzungs- und Pufferschaltung 32 das Fließen eines zu großen Stromes, wenn es zu einem gleichzeitigen Durchlegieren eines solchen Schalters 11 und des zugehörigen Meßfühlers 10 kommen sollte.

- 35 -

durchläuft, der die Anzahl der im System vorhandenen Meßeinheiten wiedergibt.

Unmittelbar nach dem Einschalten des Meßsystems und zu
Beginn eines jeden Meßzyklus gibt die Zentrale 2 über die
Befehlsleitung 8 einen Setzimpuls mit der zeitlichen Länge
$t_1$ ab, der an alle Meßeinheiten gelangt und sämtliche Rückwärtszähler 35 auf den jeweiligen Ausgangszählwert n setzt.

Danach gibt die Zentrale 2 die Adressensignale ebenfalls
auf der Befehlsleitung 8 ab, um die einzelnen Meßeinheiten
5 anzuwählen und jeweils zur Durchführung eines Meßvorgangs
zu veranlassen, bei dem zunächst der Schalter 11 geschlossen und dann wieder geöffnet wird.

Erfindungsgemäß werden diese Adressensignale nun nicht in
Form von Impulspaketen abgegeben, deren Impulszahl jeweils
dem Ausgangs-Zählwert n des programmierbaren Rückwärtszählers 35 einer ganz bestimmten Meßeinheit 5 entspricht. Vielmehr wird als Adressensignal für die erste anzuwählende
Meßeinheit, für deren Rückwärtszähler n = 1 gilt, ein einzelner Zählimpuls abgegeben, nach dessen Verarbeitung am
"0"-Ausgang des betreffenden Rückwärtszählers eine positive
Spannung erscheint (siehe Zeile $A_{n=1}$ von Fig. 9), während
die Rückwärtszähler aller übrigen Meßeinheiten von n auf
n - 1 herunterzählen, ohne daß sich an ihren "0"-Ausgängen
etwas ändert. Nur bei der Meßeinheit 5, für die n gleich 1
ist, wird daher für den Zeitraum, der zwischen diesem ersten
und dem nächsten Zählimpuls vergeht, der Schalter 11 geschlossen und der Meßfühler 10 an die Spannungsversorgungsleitung 6 gelegt, so daß ein der Umgebungstemperatur dieses
Meßfühlers 10 entsprechender Einprägestrom durch die Meßleitung 7 zur Zentrale fließt und dort ausgewertet werden
kann.

Für den Fall, daß die Meßeinheit 5 gemäß Fig. 4 aufgebaut
ist, d.h. einen zweiten Schalter 15 besitzt, der im Gegentakt zum Schalter 11 betätigt werden muß, ist, wie Fig. 7
zeigt, an den "O"-Ausgang des Rückwärtszählers 35 ein Inverter 42 geschlossen, dessen Ausgang den Ausgang $\bar{A}$ der Steuerschaltung 14 bildet.

Wenn die Messung beendet ist, wird von der Zentrale 2 zu
dem Adressensignal der eben aktivierten Meßeinheit ein Zusatzsignal hinzugefügt, das im vorliegenden Fall einfach ein
weiterer Zählimpuls ist, der über die Befehlsleitung 8 an
sämtliche Meßeinheiten gelangt. Er bewirkt, daß der Rückwärtszähler 35 derjenigen Meßeinheit 5, deren Schalter 11
eben noch geschlossen war, nach "-1" zählt, wodurch die positive Spannung am "O"-Ausgang dieses Zählers verschwindet,
während die Meßeinheit 5, deren Rückwärtszähler 35 auf n=2
programmiert ist, jetzt auf "O" zählt, so daß am zugehörigen
"O"-Ausgang eine positive Spannung erscheint und der betreffende Schalter 11 schließt (Zeile $A_{n=2}$ von Fig. 9).
Auch alle übrigen Rückwärtszähler zählen auf n-2 ohne daß
der Null-Pegel an ihrem Ausgang verschwindet, da für sie
n/2 gilt.

Zur Beendigung des Meßvorgangs an der zweiten angewählten
Meßeinheit 5 erzeugt die Zentrale 2 einen dritten Zählimpuls auf der Befehlsleitung 8, der die zweite Meßeinheit
abschaltet und eine dritte Meßeinheit anwählt. Durch die
Abgabe von p Zählimpulsen werden also zum Durchlaufen eines
Meßzyklus sämtliche Meßeinheiten 5 der Reihe nach zur
Durchführung eines Meßvorgangs veranlaßt. Hieran anschliessend wird dann entweder sofort oder nach Verstreichen einer
in ihrer Länge wählbaren Pause wieder ein Setzimpuls über
die Befehlsleitung 8 an alle Meßeinheiten 5 gesandt und es
kann ein neuer Meßzyklus durchgeführt werden.

Steuersignal abgeben kann. Eine solche Schaltungsanordnung kann beispielsweise ein zweiter programmierbarer Rückwärtszähler sein, dessen Setz- und Takteingänge parallel zum Rückwärtszähler 35' an die Ausgänge der UND-Gatter 40' bzw. 41' angeschlossen sind und dessen "O"-Ausgang mit dem $A_2$-Ausgang der Steuerschaltung 14' verbunden ist. Dieser weitere programmierbare Rückwärtszähler wird auf eine eigene Adresse programmiert, die von der Adresse aller übrigen programmierbaren Rückwärtszähler des Systems verschieden ist; dadurch besteht die Möglichkeit, jede Anwähleinheit 25 des in Fig. 3 gezeigten Systems von der Zentrale 2 her auf zwei verschiedene Weisen so anzuwählen, daß sie entweder den Schalter 28 (und evtl. vorhandene hierzu parallele Schalter 28', ...) oder den Schalter 29 (und evtl. vorhandene, hierzu parallele Schalter 29', ...) schließt. Hierdurch können, wie bereits erläutert, die Gruppen 16 bis 22 mit Hilfe von wenigstens zwei verschiedenen Anwähleinheiten 25 in unabhängiger Weise angewählt werden, wodurch die Betriebssicherheit des Systems wesentlich erhöht wird.

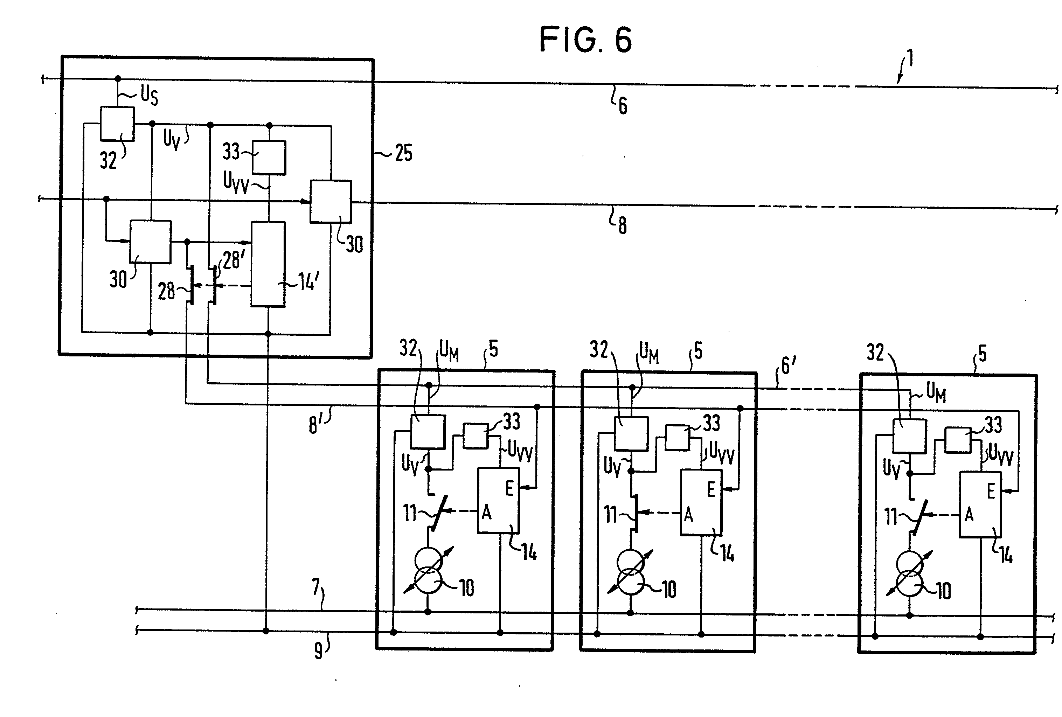

In Fig. 11 ist eine Eingangsschaltung 4 dargestellt, die erfindungsgemäß vorzugsweise dann in der Zentrale 2 zum Empfang und zur Verstärkung der auf der Meßleitung 7 ankommenden Meßsignale verwendet wird, wenn die Meßfühler 10 von beispielsweise temperaturabhängigen Stromeinprägeschaltungen gebildet werden, wie dies im Zusammenhang mit den Fig. 4 und 6 erläutert wurde.

In diesem Fall wird das jeweilige Meßsignal von dem Strom gebildet, den der jeweils aktivierte Meßfühler 10 in die Meßleitung 7 einprägt. Die Größe dieses Stroms gibt die Größe des vom betreffenden Meßfühler 10 überwachten Umgebungsparameters, also beispielsweise der Umgebungstemperatur wieder. Daher muß die Größe dieses Einprägestroms in der Zentrale 2 gemessen und der so erhaltene Meßwert weiter ausgewertet werden.

Zu diesem Zweck weist die Eingangsschaltung 4 einen ohm'schen Meßwiderstand 50 auf, dessen eines Ende über eine Leitung 51 direkt galvanisch leitend mit der Meßleitung 7 verbunden ist, während sein anderes Ende auf ein fest vorgegebenes Bezugs-Potential $U_{Ref}$ gelegt ist, dessen erfindungsgemäß bevorzugte Festlegung weiter unten noch genauer erläutert wird. Der von einer aktivierten Meßeinheit 5 kommende Einprägestrom fließt somit über den Meßwiderstand 50 zum Referenzpotential $U_{Ref}$ hin ab und erzeugt dabei am Meßwiderstand 50 einen Spannungsabfall, dessen Größe ein Maß für den überwachten Umgebungsparameter der aktivierten Meßeinheit 5 darstellt. Die am Meßwiderstand abfallende Spannung liegt üblicherweise in der Größenordnung von 0,5 Volt und muß zur weiteren Verarbeitung und Registrierung verstärkt werden.

Dies erfolgt mit Hilfe eines Meßverstärkers 52, der gemäß der Erfindung als Differenzverstärker mit hoher Gleichtaktunterdrückung ausgebildet ist. Es können hierzu beispiels-weise "Instrumentation-Amplifiers" verwendet werden, die eine Gleichtaktunterdrückung von mehr als 1 : $10^4$ bis zu einer Frequenzobergrenze von 200 kHz aufweisen.

Wie Fig. 11 zeigt, ist der eine, beispielsweise der "Plus"-Eingang des Differenzverstärkers 52 direkt galvanisch lei-tend mit dem Ende des Meßwiderstandes 50 verbunden, das über die Leitung 51 mit der Meßleitung 7 verbunden ist.

Der andere, beispielsweise der "Minus"-Eingang des Differenzverstärkers 52 ist über eine Leitung 53 galvanisch leitend mit dem einen Ende eines ohm'schen Widerstandes 54 verbunden, dessen anderes Ende an dem Bezugspotential $U_{Ref}$ liegt. Weiterhin ist der "Minus"-Eingang des Differenzverstärkers 52 über die Leitung 53 mit dem einen Anschluß eines Kondensators 55 verbunden, dessen anderer Anschluß mit der Meßleitung 7 verbunden ist. Schließlich ist noch zwischen die Leitung 51, die die Meßleitung 7 mit dem "Plus"-Eingang des Differenzverstärkers 52 verbindet, und die Referenzspannung $U_{Ref}$ eine
aus einem Kondensator 56 und einem ohm'schen Widerstand 57
bestehende Serienschaltung geschaltet, die somit parallel
zum Meßwiderstand 50 liegt.

Diese erfindungsgemäße Anordnung dient zur Lösung des folgenden Problems:

Bei großen Meßsystemen ist die Meßleitung 7, die sämtliche
Meßeinheiten 5 miteinander verbindet und auf der der von der
jeweils einzigen aktivierten Meßeinheit 5 eingeprägte Strom
der Zentrale 2 zugeführt wird, außerordentlich lang. Dies hat
zur Folge, daß auf diese Meßleitung 7 Wechselspannungs-
Störungen eingekoppelt werden, die vom System selbst oder
auch von außen stammen können. Aufgrund dieser Störungen
treten am Meßwiderstand 50 Spannungen auf, die in der gleichen
Größenordnung liegen, wie die Spannung, die an ihm aufgrund
des über die Meßleitung 7 kommenden Einprägestroms abfällt.
Das Signal/Rauschverhältnis wäre ohne weitere Maßnahmen
also außerordentlich schlecht.

Um dieses Signal/Rauschverhältnis zu verbessern, sind, wie
oben bereits beschrieben, die beiden Eingänge des Differenzverstärkers 52 mit der Meßleitung 7 verbunden, wobei der
"Plus"-Eingang mit der Meßleitung direkt galvanisch leitend
verbunden und der "Minus"-Eingang mit der Meßleitung 7
kapazitiv gekoppelt ist. Mit anderen Worten: die Meßleitung
7 wird in der Eingangsschaltung 4 in zwei Zweige 51, 53 aufgespalten. Von wesentlicher Bedeutung ist dabei, daß jeder
dieser beiden Zweige mit einem dem Wellenwiderstand der Meßleitung 7 entsprechenden Abschlußwiderstand zum Bezugspotential $U_{Ref}$ hin abgeschlossen ist. Dies geschieht für jeden
der beiden Zweige mit Hilfe einer aus einem Kondensator und
einem ohm'schen Widerstand bestehenden Serienschaltung, wobei die dem Zweig 51 zugeordnete Serienschaltung aus dem Kondensator 56 und dem Widerstand 57 parallel zum Meßwiderstand 50 liegt, während die dem Zweig 53 zugeordnete Serienschaltung von dem Koppelkondensator 55 und dem ohm'schen Widerstand 54 gebildet wird.

Die von den beiden Serienschaltungen gebildeten Abschlußwiderstände sorgen dafür, daß Wechselspannungs-Störungen auf der Meßleitung 7 an die beiden Eingänge des Differenzverstärkers mit gleich großer Amplitude gelangen und keine Phasenverschiebungen gegeneinander aufweisen, da jeder der beiden Zweige 51, 53 einen an den Wellenwiderstand der Meßleitung 7 angepaßten, reflexionsfreien Abschluß besitzt. Wegen seiner hohen Gleichtaktunterdrückung kann somit der Differenzverstärker 52 alle auf der Meßleitung 7 ankommenden Wechselspannungs-Störungen nahezu vollständig unterdrücken, während die aufgrund des Einprägestroms am Meßwiderstand 50 abfallende Gleichspannung nur seinem "Plus"-Eingang zugeführt wird, und daher am Ausgang des Differenzverstärkers 52 mit der gewünschten Verstärkung erscheint.

Die hierdurch erzielte Störungsunterdrückung ist so gut, daß es möglich ist, auch bei sehr großen und weit verzweigten Meßsystemen noch einwandfreie Meßergebnisse zu erzielen. Dabei kann die Meßleitung 7 als System-Meßleitung alle Meßeinheiten 5 miteinander verbinden und es ist nicht erforderlich, zusätzliche Gruppen-Meßleitungen vorzusehen, die durch entsprechende Schalter in den Anwähleinheiten 25 nur dann mit der Meßleitung 7 verbunden werden, wenn die betreffende Anwähleinheit aktiviert ist.

Die Bezugsspannung $U_{Ref}$, mit der das Ende des Meßwiderstandes 50 verbunden ist, das nicht am "Plus"-Eingang des Differenzverstärkers 52 liegt, kann prinzipiell das Null-Potential sein.

Wert, beispielsweise 0,5 V größer ist als der auf der
Masseleitung 9 maximal zugelassene Spannungsabfall. Wird
das Gesamtsystem beispielsweise so dimensioniert, daß
zwischen der am ungünstigsten liegenden Meßeinheit 5 und
der Zentrale 2 auf der Masseleitung 9 höchstens ein Spannungsabfall von 3 V auftreten kann, so wird das Bezugspotential $U_{Ref}$ auf 3,5 V gelegt. Damit ist sichergestellt,
daß in die am ungünstigsten gelegenen Meßeinheit 5 bei geöffnetem Schalter 11 am Meßfühler 10 keine positive Spannung
abfällt, die zum Einprägen eines Stromes in die Meßleitung
7 führen könnte. Bei dieser Anordnung kann bei Meßeinheiten
5, die nur einen geringen Abstand von der Zentrale 2 aufweisen, das Potential auf der Meßleitung 7 um einige Volt
über dem Potential auf der Masseleitung 9 liegen, so daß
also an den betreffenden Meßfühlern 10 eine Gegenspannung
abfällt. Die mit dem Meßfühler 10 in Reihe geschalteten
Dioden 12, 13 sind jedoch so gepolt, daß diese Spannung an
ihnen in Sperrichtung anliegt und somit kein Strom von der
Meßleitung 7 auf die Masseleitung 9 fließen kann. Finden
als Meßfühler 10 temperaturabhängige Stromquellen Verwendung,
so wird diese Sperrwirkung der Dioden 12, 13 noch erhöht,
da auch diese Stromquellen Diodencharakteristik besitzen
und sie so mit den Dioden 12, 13 in Reihe geschaltet werden, daß die Sperrichtungen dieser drei Bauelemente gleichgerichtet sind.

Durch das erfindungsgemäße "Hochlegen" der Bezugsspannung
$U_{Ref}$ gegenüber dem Null-Potential können also als Schalter 11
Halbleiterschalter oder andere Schalter verwendet werden, die
im geöffneten Zustand einen Leckstrom durchlassen, ohne daß
hierdurch die Größe des Meßsystems begrenzt wird.

Erfindungsgemäß werden die einzelnen Meßeinheiten 5 so angesteuert, daß mit einem möglichst geringen Zeitabstand von
einem gerade aktivierten Meßfühler auf den nächsten umgeschaltet wird. Der zeitliche Abstand zwischen dem Öffnen eines geschlossenen Schalters 11 einer bisher aktivierten Meßeinheit und dem Schließen des Schalters 11 der nächsten zu
aktivierenden Meßeinheit soll möglichst klein, vorzugsweise im Bereich der Ansprechzeit der Meßfühler, d.h. in
der Größenordnung von 20 /us bis maximal 50 /us gehalten werden.
Derart kurze Umschaltzeiten bieten folgenden Vorteil: Wie
bereits erwähnt, besitzt das von der Belegkapazität der
Meßleitung 7 und dem Meßwiderstand 50 gebildete RC-Glied
eine gewisse Zeitkonstante, die nicht beliebig klein gemacht werden kann, da die Belegkapazität von der Länge der
Meßleitung 7 abhängt und der Meßwiderstand 50 eine gewisse
Mindestgröße haben muß, damit der jeweils von einem Meßfühler 10 eingeprägte Meßstrom zu einem nicht zu kleinen,
gut weiterverarbeitbaren Spannungsabfall führt. Geht man
davon aus, daß auf der Meßleitung 7 längere Zeit kein Strom
geflossen ist, dann ist die Belegkapazität der Meßleitung
7 völlig entladen und beim Einschalten eines Meßfühlers
muß der vom Meßfühler eingeprägte Strom zunächst die Belegkapazität aufladen, bevor er in voller Größe am Meßwiderstand 50 der Eingangsschaltung 4 zur Verfügung steht. Die
Zeit, die benötigt wird, bis dieser eine genaue Messung
ermöglichende eingeschwungene Zustand erreicht wird, hängt
von der Zeitkonstante des hier in Rede stehenden RC-Gliedes
ab. Würde man nun die Umschaltzeit von einem aktivierten
Meßfühler auf den nächsten so groß machen, daß sich die
Belegkapazität der Meßleitung in dieser Zeitspanne weitgehend oder vollständig entladen kann, so müßte auch der
nächste Meßfühler wieder so lange aktiviert bleiben, bis
die Belegkapazität vollständig aufgeladen und ein stabiler
Zustand erreicht worden ist. Die Zeitkonstante des RC-Gliedes würde als voll in die Taktfrequenz eingehen, mit der
von einer Meßeinheit zur nächsten weitergeschaltet werden
kann. Dadurch, daß gemäß der Erfindung die Umschaltzeiträume möglichst kurz gewählt werden, hat die Belegkapazität der Meßleitung 7 nicht ausreichend Zeit, um sich nach dem Abschalten des bisher aktivierten Meßfühlers 10 wesentlich zu entladen, bevor der nächste Meßfühler aktiviert wird. Die Belegkapazität muß daher nur geringfügig in dem Maße umgeladen werden, indem sich die von zwei nacheinander aktivierten Meßfühlern eingeprägten Ströme voneinander unterscheiden. Diese Umladezeit ist aber wesentlich kürzer als die Zeitkonstante des RC-Gliedes, so daß der Übergang von einem eingeschwungenen Zustand in den nächsten sehr schnell erfolgt. Damit kann die Taktfrequenz, mit der die Meßeinheiten der Reihe nach angewählt werden, wesentlich höher gewählt werden, als dies bei größeren "Pausen" zwischen den einzelnen Stromeinpräge-Vorgängen möglich wäre. In jedem Fall wird aber sichergestellt, daß die Meßfühler nicht überlappend eingeschaltet werden, daß also mit Sicherheit immer der bisher eingeschaltete Meßfühler ausgeschaltet ist, bevor der nächste Meßfühler eingeschaltet wird.

Es soll nun anhand von Fig. 12 eine erste Ausführungsform einer Strombegrenzungs- und Pufferschaltung 32 erläutert werden. Diese Schaltung besitzt zwei gleich aufgebaute Zweige 60, 70, die zur Erhöhung der Zuverlässigkeit zueinander parallel angeordnet sind. Jeder der beiden Zweige 60, 70 umfaßt eine Strombegrenzungsdiode 61 bzw. 71, einen Strombegrenzungswiderstand 62 bzw. 72 und einen Pufferkondensator 63 bzw. 73, die in dieser Reihenfolge seriell zwischen die Spannungsversorgungsleitung 6 bzw. 6' und die Masseleitung 9 geschaltet sind. Zwischen dem Strombegrenzungswiderstand 62 bzw. 72 und dem Pufferkondensator 63 bzw. 73 kann die Versorgungsspannung $U_V$ für die jeweils nachgeordnete Schaltung abgegriffen werden. Um von den beiden parallelen Zweigen 60, 70 eine gemeinsame Spannung $U_V$ abgreifen zu können, sind die beiden Abgriffspunkte für die Versorgungsspannung durch zwei gegeneinander geschaltete Dioden 64 und 74 entkoppelt, die mit ihren Kathodenanschlüs-

0212247

sen miteinander verbunden sind. Vom Verbindungspunkt dieser
beiden Entkopplungsdioden 64 und 74 wird dann die Versorgungsspannung $U_V$ den nachgeordneten Schaltungseinheiten
zugeführt.

Diese Strombegrenzungs- und Pufferschaltung 32 wird vorteilhafterweise dann eingesetzt, wenn sehr große Meßsysteme
aufgebaut werden müssen. Um bei diesen Meßsystemen den Strombedarf und damit auch den Querschnitt der Stromversorgungs-
und der Masseleitung möglichst klein zu halten, werden ihre
Schaltungen zweckmäßigerweise aus C-MOS-Bausteinen aufgebaut, die im Ruhezustand eine außerordentlich niedrige
Stromaunahme haben, beim Umschalten von einem Logikpegel
in den anderen aber kurzfristig einen im Vergleich hierzu
wesentlich höheren Strom ziehen.

Da bei einem großen Meßsystem, das 50000 und mehr Meßeinheiten mit den zugehörigen Anwähleinheiten umfassen
kann, bei Dauerbetrieb nach gewisser Zeit mit Sicherheit
Bauelemente ausfallen, muß vor allem bei Kabeln, die an unzugänglichen Stellen, beispielsweise im Erdboden verlegt
sind, dafür gesorgt werden, daß solche Defekte nur die unmittelbar betroffene Schaltung, nicht aber das gesamte
Meßsystem funktionsunfähig machen.

Am gefährlichsten in dieser Hinsicht ist das Durchlegieren
von Bauelementen, das den normalerweise hohen Eingangswiderstand eines Eingangs praktisch auf Null reduziert, so
daß in diesen Eingang ein sehr hoher Strom fließen kann.

Dies wird bei der erfindungsgemäßen Strombegrenzungsschaltung 32 zumindest für die Stromversorgungseingänge,
an denen die Versorgungsspannung $U_V$ liegt, primär durch die
Strombegrenzungsdioden 61, 71 verhindert, die bei Verwendung
in einer Meßeinheit 5 den durch sie hindurchfließenden Strom
auf einen Wert, beispielsweise 400 $\mu$A begrenzen, der etwas
größer ist als der Strom, den die Meßeinheit 5 für die Erzeugung des maximal möglichen Meßstroms benötigt. Im Prinzip würde in jedem der beiden Zweige 60, 70 eine solche Strombegrenzungsdiode genügen, doch wird zur Erhöhung der Zuverlässigkeit erfindungsgemäß mit dieser Diode ein zweites, gleich wirkendes Bauelement in Reihe geschaltet. Da die Kosten für solche Strombegrenzungsdioden vergleichsweise groß sind, wird als zweites Bauelement vorzugsweise ein Strombegrenzungswiderstand 62, 72 gewählt, dessen Grenzstrom in Abhängigkeit von der Versorgungsspannung $U_M$ allerdings wesentlich größer als der Grenzstrom der Dioden 61, 71 sein kann.

Insbesondere bei großen Meßsystemen müssen die Strombegrenzungswiderstände 62, 72 so groß dimensioniert werden, daß der Strom, der insgesamt über die Spannungsversorgungsleitungen 6 bzw. 6' gezogen wird, auch dann nicht zu groß wird, wenn es an mehreren Meßeinheiten und/oder Anwähleinheiten, in deren Stromversorgung jeweils eine Schaltung 32 liegt, zu einem Durchlegieren kommt. Ein bevorzugter Wert für die Strombegrenzungswiderstände 62, 72 ist beispielsweise 10 k$\Omega$. Bei der Verwendung von C-MOS-Bausteinen würde dies aber ohne weitere Maßnahmen bedeuten, daß wegen der oben erwähnten, für diese Bausteine charakteristischen Schaltstromspitzen die Versorgungsspannung bei jedem Schaltvorgang zusammenbrechen würde. Um dies zu verhindern, sind die Pufferkondensatoren 63, 73 vorgesehen, die für die kurzen Schaltzeiten den benötigten Strom liefern und sich dann über den Widerstand 62 bzw. 72 wieder aufladen. Dabei bewirkt die Strombegrenzungsdiode 61 bzw. 71, daß nicht die gesamte Spannung am Widerstand 62 bzw. 72 abfällt und somit ein wesentlich niedrigerer Strom fließt. Daher erfolgt das Wiederaufladen der Pufferkondensatoren 63, 73 über einen Zeitraum hinweg, der wesentlich länger als der für den Schaltvorgang benötigte Zeitraum ist. Der Strombedarf, der bei C-MOS-Bausteinen für die kurzen Schaltzeiten sehr hoch und für die dazwischenliegenden Ruhezeiten außerordentlich niedrig ist, wird also durch diese Schaltung in einen in etwa gleichförmigen mittleren Strombedarf übergeführt. Der Querschnitt der Stromversorgungsleitung 6 bzw. 6' kann dann in vorteilhafter Weise auf diesen mittleren Strombedarf ausgerichtet werden und es ist keine Anpassung an die hohen Schaltstromspitzen erforderlich.

In dieser Hinsicht von besonderer Bedeutung ist die zweifache Verwendung der eben beschriebenen Strombegrenzungs- und Pufferschaltung in den Anwähleinheiten 25, wie dies in Fig. 6 dargestellt ist. Hier wird die Spannungsversorgungsleitung 6' der ganzen Meßeinheitengruppe über den Schalter 28' im Ruhezustand von der Verbindung mit der durchgehenden System-Spannungsversorgungsleitung abgetrennt. Wird bei einem solchen System eine Anwähleinheit 25 aktiviert, so daß die Steuerschaltung 14' die Schalter 28 und 28' schließt, werden sämliche Meßeinheiten 5 dieser Gruppe gleichzeitig an die Stromversorgung gelegt und ziehen dabei einen entsprechend hohen Einschaltstrom. Da eine Gruppe 1000 und mehr Meßeinheiten umfassen kann, würde dies eine sehr starke Spitzenbelastung der durchgehenden Spannungsversorgungsleitung 6 bedeuten. Um dies zu vermeiden, verbindet daher der Schalter 28' im geschlossenen Zustand die Gruppen-Spannungsversorgungsleitung 6' mit dem Ausgang der Strombegrenzungs- und Pufferschaltung 32, die im übrigen auch ihre abgepufferte Versorgungsspannung $U_V$ an die Steuerschaltung 14' abgibt. Die Pufferkondensatoren 63, 73 dieser Strombegrenzungs- und Pufferschaltung 32 müssen genügend groß dimensioniert sein, um die beim Schließen des Schalters 28' auftretende Einschaltstromspitze liefern zu können, die wesentlich größer ist als die Stromspitzen, die beim Betrieb der Steuerschaltung 14' auftreten. Bei den Strombegrenzungs- und Pufferschaltungen 32, die in den Meßeinheiten 5 Verwendung finden, können die Kondensatoren an den an diesen Stellen wesentlich geringeren Spitzenstrombedarf angepaßt und entsprechend kleiner dimensioniert sein.

In Fig. 13 ist eine Meßeinheit 75 in einer Ausführungsform dargestellt, die erfindungsgemäß immer dann Verwendung findet, wenn an die Zuverlässigkeit des Meßsystems besonders hohe Anforderungen gestellt werden.

Die Meßeinheit 75 in Fig. 13 umfaßt wie die Meßeinheit 5 in Fig. 4 einen Meßfühler 10, der als temperaturabhängige Stromquelle ausgebildet ist; anstelle des Schalters 11 aus Fig. 4 tritt hier eine aus sechs Schaltern 91 bis 96 bestehende Schalteranordnung 90. Von diesen sechs Schaltern 91 bis 96 liegen jeweils zwei Schalter, nämlich die Schalter 91 und 92, die Schalter 93 und 94 und die Schalter 95 und 96 miteinander in Reihe. Diese drei aus jeweils zwei Schaltern bestehenden Reihenschaltungen sind einerseits über drei Entkopplungsdioden 97, 98, 99 mit dem Spannungsversorgungsanschluß des Meßfühlers 10 und andererseits jeweils mit einem von drei Ausgängen einer Strombegrenzungs- und Pufferschaltung 32 verbunden, die voneinander unabhängig die für den Betrieb des Meßfühlers 10 erforderliche Spannung liefern. Somit kann an den Meßfühler 10 die Betriebsspannung auch dann noch angelegt werden, wenn zwei von den drei so gebildeten Spannungs-Versorgungswegen 104, 105 und 106 ausfallen. Andererseits stellt das Hintereinanderschalten von jeweils zwei Schaltern 91, 92 bzw. 93, 94 bzw. 95, 96 in jedem dieser Spannungs-Versorgungswege 104, 105, 106 sicher, daß der Meßfühler 10 in der erforderlichen Weise nach Durchführung einer Messung auch dann noch von der Versorgungsspannung wieder getrennt werden kann, wenn in jedem der Versorgungswege einer der beiden Schalter in der Weise ausfallen sollte, daß er nicht mehr geöffnet werden kann.

Da die Schalter 91 bis 96 immer gleichzeitig geöffnet und geschlossen werden, können sie prinzipiell von ein und derselben Steuerschaltung 14 angesteuert werden. Zur Erhöhung der Zuverlässigkeit sind jedoch bei dem in Fig. 13 gezeigten Ausführungsbeispiel drei Steuerschaltungen $14_1$, $14_2$ und $14_3$ vorgesehen, deren Eingänge $E_1$, $E_2$ und $E_3$ zueinander parallel an die Befehlsleitung 8 angeschlossen sind und deren Adressen-Empfangsschaltungen auf die gleiche Adresse programmiert sind. Der Ausgang $A_1$ der ersten Steuerschaltung $14_1$ steuert einen der beiden Schalter, nämlich den Schalter 91 im ersten Spannungs-Versorgungsweg 104 und einen der beiden Schalter, nämlich den Schalter 93, im zweiten Spannungs-Versorgungs-

weg 105. Der Ausgang $A_2$ der zweiten Steuerschaltung $14_2$ steuert den zweiten Schalter 92 im ersten Spannungs-Versorgungsweg 104 und einen der beiden Schalter, nämlich den Schalter 95, im dritten Spannungs-Versorgungsweg 106. Der Ausgang $A_3$ der dritten Steuerschaltung $14_3$ steuert den zweiten Schalter 94 im zweiten Spannungs-Versorgungsweg 105 und den zweiten Schalter 96 im dritten Spannungs-Versorgungsweg 106 des Meßfühlers 10.

Die Spannungsversorgungseingänge der Steuerschaltungen $14_1$, $14_2$ und $14_3$ sind über drei voneinander getrennte Leitungen 101, 102 und 103 an drei weitere Versorgungsspannungs-Ausgänge der Strombegrenzungs- und Pufferschaltung 32 angeschlossen. Gewünschtenfalls/in kann jede der Leitungen 101, 102 und 103 noch ein Gleichspannungsregler 33 eingeschaltet werden, wie dies beispielsweise in Fig. 4 gezeigt ist. Für den Fall, daß die Schalter 91 bis 96 mit Hilfe von Halbleiterschaltern realisiert werden, kann jede der Steuereinheiten $14_1$, $14_2$ und $14_3$ einen zweiten Ausgang $\bar{A}$ aufweisen, mit dessen Hilfe dann ein dem Schalter 15 aus Fig. 4 entsprechender Schalter im Gegentakt zu den Schaltern 91 bis 96 gesteuert wird. Dabei muß jeder der drei Spannungs-Versorgungswege 104, 105, 106 über einen entsprechenden Schalter mit der Masseleitung 9 verbindbar sein. Diese Schalter wurden in Fig. 13 der besseren Übersichtlichkeit halber jedoch weggelassen. Die Funktion der Dioden 13 aus Fig. 4 wird bei dem Ausführungsbeispiel nach Fig. 13 von den Dioden 97, 98 und 99 übernommen, von denen jede gewünschtenfalls auch durch zwei hintereinander geschaltete Dioden ersetzt werden kann.

Die in Fig. 13 dargestellte Strombegrenzungs- und Pufferschaltung 32 ist ähnlich aufgebaut wie das in Fig. 12 dargestellte Ausführungsbeispiel. Im Gegensatz zu diesem Ausführungsbeispiel besitzt sie jedoch nicht zwei sondern drei zueinander parallel angeordnete Zweige 60, 70 und 80, von denen jeder eine Strombegrenzungsdiode 61 bzw. 71 bzw. 81, einen Strombegrenzungswiderstand 62 bzw. 72 bzw. 82 und einen Pufferkondensator 63 bzw. 73 bzw. 83 umfaßt, die in dieser Reihenfolge seriell zwischen die Spannungsversorgungsleitung 6 und die Masseleitung 9 geschaltet sind. An den Verbindungspunkten 68 bzw. 78 bzw. 88 zwischen dem jeweiligen Strombegrenzungswiderstand 62 bzw. 72 bzw. 82 und dem zugehörigen Pufferkondensator 63 bzw. 73 bzw. 83 erfolgt der Abgriff von drei Meßfühler-Versorgungsspannungen, die gleich groß sind aber voneinander unabhängig über die drei Zweige 60 bzw. 70 bzw. 80 der Strombegrenzungs- und Pufferschaltung 32 aus der über die Spannungsversorgungsleitung 6 zugeführten Meßstellen-Versorgungsspannung $U_M$ abgeleitet und, wie oben beschrieben, über die drei getrennten Spannungs-Versorgungswege 104, 105, 106 mit Hilfe der Schalteranordnung 90 an den Meßfühler 10 angelegt werden können. Zwischen die Verbindungspunkte 68 und 78 der beiden Zweige 60 und 70 sind, wie beim Ausführungsbeispiel in Fig. 12 zwei einander entgegengerichtete, mit ihren Kathoden-Anschlüssen miteinander verbundene Dioden 64, 74 geschaltet, zwischen denen die Versorgungsspannung für die Steuerschaltung $14_1$ abgegriffen wird. In entsprechender Weise sind zwischen die Verbindungspunkte 78 und 88 der beiden Zweige 70 und 80 zwei Entkopplungsdioden 76, 86 geschaltet, zwischen denen die Versorgungsspannung für die Steuerschaltung $14_3$ abgegriffen wird. Darüberhinaus sind in gleicher Weise zwischen die beiden Verbindungspunkte 68 und 88 der beiden Zweige 60, 80 zwei Entkopplungsdioden 67, 77 geschaltet, zwischen denen die Versorgungsspannung für die Steuerschaltung $14_2$ abgegriffen ist.

Durch diese Art der Vermaschung der drei Zweige 60, 70, 80 der Strombegrenzungs- und Pufferschaltung 32 wird eine außerordentlich hohe Zuverlässigkeit erzielt, da selbst dann, wenn zwei von den drei Zweigen 60, 70, 80 ausfallen und beispielsweise wegen eines Kurzschlusses im Pufferkondensator 63, 73, 83 am Verbindungspunkt 68 bzw. 78 bzw. 88 keine Spannung mehr liefern, immer noch eine der drei Steuerschaltungen $14_1$, $14_2$ bzw. $14_3$ und einer der drei Spannungs-Versorgungswege 104, 105, 106 die nötige Betriebsspannung erhalten und somit die Meßeinheit 75 funktionsfähig bleibt.

Dabei ist noch folgendes von Bedeutung: Wie man der Fig. 13 entnimmt, liegen beispielsweise im Spannungs-Versorgungsweg 104 des Meßfühlers 10 die beiden Schalter 91 und 92 miteinander in Serie, die von den beiden Steuerschaltungen $14_1$ und $14_2$ betätigt werden. Diese beiden Steuerschaltungen sind über die Entkopplungsdioden 64 und 67 mit dem Verbindungspunkt 68 des Zweiges 60 der Strombegrenzungs- und Pufferschaltung 32 verbunden und an diesen Verbindungspunkt 68 ist auch der Spannungs-Versorgungsweg 104 angeschlossen. Entsprechendes gilt auch für den Spannungs-Versorgungsweg 105, der mit dem Verbindungspunkt 78 des Zweiges 70 verbunden ist, an den über die Dioden 74 und 76 die beiden Steuerschaltungen $14_1$ und $14_3$ angeschlossen sind, die die beiden Schalter 93 und 94 betätigen, die in eben diesem Spannungs-Versorgungsweg 105 liegen. Der Spannungs-Versorgungsweg 106 ist in gleicher Weise an den Verbindungspunkt 88 des Zweiges 80 angeschlossen, mit dem über die Dioden 77 und 86 die beiden Steuerschaltungen $14_2$ und $14_3$ mit Betriebsspannung versorgt werden, die die beiden im Spannungs-Versorgungsweg 106 liegenden Schalter 95 und 96 betätigen.

Durch diese Art der Verbindungen wird erreicht, daß beim Ausfall von zwei Zweigen in der Strombegrenzungs- und Pufferschaltung 32 genau der Spannungs-Versorgungsweg 104 bzw. 105 bzw. 106 mit dem Verzweigungspunkt 68 bzw. 78 bzw. 88 verbunden ist, der noch funktionsfähig ist und Versorgungsspannung auch an die beiden Steuereinheiten liefert, die die Schalter in dem betreffenden Stromversorgungsweg betätigen. Nimmt man z.B. an, daß die beiden Zweige 60 und 70 aufgrund eines Kurzschlusses in den beiden Pufferkondensatoren 63 und 73 ausfallen, dann kann an den Verbindungspunkten 68 und 78 keine Versorgungsspannung mehr abgegriffen werden, so daß einerseits die beiden Spannungs-Versorgungswege 104 und 105 und andererseits die Steuerschaltung $14_1$ ausfallen. Versorgungsspannung steht dann nur noch am Verbindungspunkt 88 zur Verfügung, von dem sie einerseits in den Spannungs-Versorgungsweg 106 und andererseits über die Dioden 77 und 86 an die Steuerschaltungen $14_2$ und $14_3$ gelangt. Eben diese beiden Steuerschaltungen betätigen aber die Schalter 95 und 96 in dem funktionsfähig gebliebenen Spannungs-Versorgungsweg 106, so daß also trotz des Ausfalles von zwei Zweigen 60 und 70 der Meßfühler 10 einwandfrei ein- und ausgeschaltet werden kann. Entsprechendes gilt für den gleichzeitigen Ausfall der Zweige 70 und 80 bzw. 60 und 80.

Wie bereits erwähnt, werden die Schalter 91 bis 96 vorzugsweise mit Hilfe von Halbleiter-Schaltern realisiert, denen eine Betriebs- bzw. Versorgungsspannung zugeführt werden muß. Die hierfür erforderlichen Leitungen sind in Fig. 13 der Übersichtlichkeit halber nicht dargestellt. Es sei jedoch ausdrücklich darauf hingewiesen, daß gemäß der Erfindung als Versorgungsspannung für diese Schalter 91 bis 96 jeweils die Versorgungsspannung gewählt wird, die auch der Steuerschaltung $14_1$ bzw. $14_2$ bzw. $14_3$ zugeführt wird, von der die Schalter jeweils betätigt werden. Es liegen also die Schalter 91, 93 an der gleichen Versorgungsspannung wie die Steuerschaltung $14_1$, die Schalter 92, 95 an der gleichen Versorgungsspannung wie die Steuerschaltung $14_2$

und die Schalter 94, 96 an der gleichen Versorgungsspannung wie die Steuerschaltung $14_3$. Demgegenüber wird die von diesen Schaltern zu schaltende Betriebsspannung für den Meßfühler 10 nicht zwischen den Entkopplungsdioden 64, 74 bzw. 76, 86 bzw. 67, 77 sondern von den Verbindungspunkten 68 bzw. 78 bzw. 88 der Strombegrenzungs- und Pufferschaltung 32 abgegriffen. Dies hat zur Folge, daß auch dann, wenn zwei der drei Zweige 60, 70, 80 ausfallen, die Versorgungsspannung für die Schalter 91 bis 96 immer höher bleibt als die zu schaltende Betriebsspannung für den Meßfühler 10; dies ist erforderlich, weil es zu einer Beschädigung bzw. Zerstörung von Halbleiterschaltern kommt, wenn die zu schaltende Spannung höher wird als die Versorgungsspannung.

Um mit Sicherheit zu verhindern, daß im normalen, fehlerfreien Betrieb aufgrund des Spannungsabfalls über den Entkopplungsdioden 64, 74, 67, 77 und 76, 86 die an den Verbindungspunkten 68, 78 und 88 abgegriffene Spannung, die von den Schaltern 91 bis 96 geschaltet werden muß, größer wird als die über die Leitungen 101, 102 und 103 abgegriffenen Versorgungsspannungen dieser Schalter, kann in jeden der Spannungs-Versorgungswege 104, 105 und 106 noch eine Diode 107, 108 bzw. 109 eingeschaltet werden.

In entsprechender Weise kann auch die Strombegrenzungs- und Pufferschaltung 32, die in den Anwähleinheiten 25 Verwendung findet, mit drei Zweigen ausgebildet werden, die in der oben beschriebenen Weise miteinander vermascht sind. In diesem Fall besitzen dann auch die Anwähleinheiten drei zueinander parallele Steuerschaltungen $14_1'$, $14_2'$ und $14_3'$, die dann eine aus mehreren Schaltern bestehende Schalteranordnung betätigen, die in diesem Fall den oder die Schalter 28, 28', ... bzw. 29, 29', ... ersetzt. Diese auf eine besonders hohe Zuverlässigkeit aus-

gelegte Form der Anwähleinheiten 25 wird vorzugsweise auch
bei solchen Meßsystemen eingesetzt, bei denen die Meßeinheiten 5 nicht gemäß der obigen Fig.13 sondern beispielsweise gemäß den Fig. 4 und 5 aufgebaut sind. Da der Ausfall einer Anwähleinheit immer eine gesamte Meßeinheit-
Gruppe unbenutzbar macht, sind an die Zuverlässigkeit der
Anwähleinheiten auch dort besonders hohe Forderungen zu
stellen, wo an die Zuverlässigkeit der Meßeinheiten nur mäßige
oder geringe Anforderungen gestellt werden.

Es ist klar, daß es bei großen Meßsystemen, die eine Kabellänge von 50 km und mehr aufweisen, nicht möglich ist, die
Impulse, die die Adressensignale der Meßeinheiten und der
Anwähleinheiten bilden, sowie die zum Setzen der programmierbaren Rückwärtszähler in diesen Einheiten benötigten Impulse von der Zentrale 2 aus in eine einfache, das gesamte
System ohne Unterbrechung durchlaufende Kabelader ohne
wiederholte Regenerierung und Formung der Impulse einzuspeisen.

Wie bereits erwähnt, ist daher erfindungsgemäß vorgesehen,
in die durchgehende System-Befehlsleitung 8 in jeder Anwähleinheit 25 eine erste Signalformerschaltung 30 einzufügen, die alle auf der System-Befehlsleitung 8 von der
Zentrale 2 über die vorausgehende Anwähleinheit 25 ankommenden Impulse aufbereitet, bevor sie in den
folgenden Leitungsabschnitt eingespeist werden. Ebenso ist
vorzugsweise in jeder Anwähleinheit 25 eine zweite Signalformerschaltung 30 vorgesehen, die die ankommenden Impulse aufbereitet, bevor sie über den geschlossenen Schalter 28 den Meßeinheiten 5 der zugehörigen
Gruppe zugeführt werden (siehe Fig. 6). Diese beiden
Signalformerschaltungen 30 können im Prinzip gleich aufgebaut sein und werden im folgenden unter Bezugnahme auf
Fig. 14 näher erläutert.

Alle für die Signalformerschaltung 30 benötigten Schaltungen und Bauelemente sind teils in paralleler teils in serieller Anordnung mehrfach vorhanden, um die Zuverlässigkeit und Betriebssicherheit der Schaltung zu erhöhen. So werden zunächst die auf der Befehlsleitung 8 am Eingang E ankommenden, impulsförmigen Signale in drei zueinander parallelen Signalpfaden 110, 111 und 112 weiterverarbeitet, von denen jeder einen Strombegrenzungswiderstand 113, 114, 115 und einen mit diesem Widerstand in Reihe liegenden Schmitt-Trigger 116, 117, 118 umfaßt. Dabei dienen die Widerstände 113, 114 und 115 wieder zur Begrenzung des Stroms, der in den Eingang E der Signalformerschaltung 30 hineinfließt, wenn es in dieser Schaltung durch das Durchlegieren eines Bauelementes zu einem Kurzschluß auf Masse gekommen ist. Die Schmitt-Trigger 116, 117 und 118 dienen dazu, die Flanken der am Eingang E ankommenden Impulse so zu regenerieren, daß eine einwandfreie Ansteuerung der beiden nachfolgenden Schaltergruppen 119, 120 möglich wird. Jede der beiden Schaltergruppen 119, 120 umfaßt drei zueinander parallele Zweige 121, 122, 123 bzw. 124, 125, 126, die jeweils aus zwei miteinander in Reihe geschalteten Schaltern $S_1$ bis $S_{12}$ bestehen. Somit umfaßt die eine Schaltergruppe 119 sechs Schalter $S_1$ bis $S_6$ und die andere Schaltergruppe 120 sechs Schalter $S_7$ bis $S_{12}$. Die Ansteuerung der Schalter $S_1$ bis $S_{12}$ durch die Schmitt-Trigger 116, 117, 118 erfolgt so, daß die Schalter innerhalb einer Gruppe 119 bzw. 120 gleichzeitig, die Schalter der einen Gruppe aber immer im Gegentakt zu denen der anderen Gruppe betätigt werden. So ist in Fig. 14 der Schaltzustand dargestellt, in dem beim Anliegen eines "0"-Signals am Eingang E die Schalter $S_1$ bis $S_6$ der Gruppe 119 geöffnet und die Schalter $S_7$ bis $S_{12}$ der Gruppe 120 geschlossen sind. Dabei wird davon ausgegangen, daß für die beiden Gruppen unterschiedliche Schalter-Typen verwendet werden, die durch die gleichen Ansteuer-Signalpegel jeweils in entgegengesetzte Schaltzustände bringbar sind.

Dies kann z.B. dadurch erreicht werden, daß man als Schalter $S_1$ bis $S_6$ p-Kanal-Feldeffekt-Transistoren und als Schalter $S_7$ bis $S_{12}$ n-Kanal-Feldeffekt-Transistoren verwendet. Jeder der drei Schmitt-Trigger 116, 117, 118 steuert zwei in verschiedenen Zweigen der einen Schaltgruppe liegende Schalter und zwei in entsprechenden Zweigen der anderen Schaltergruppe liegenden Schalter an. So sind mit dem Signalausgang des Schmitt-Triggers 116 die Steuereingänge der Schalter $S_1$ und $S_6$ sowie der Schalter $S_8$ und $S_{11}$ verbunden, während der Schmitt-Trigger 117 die Schalter $S_2$ und $S_3$ sowie $S_7$ und $S_{10}$, und der Schmitt-Trigger 118 die Schalter $S_4$ und $S_5$ sowie $S_9$ und $S_{12}$ ansteuert.

Durch diese Anordnung wird erreicht, daß zwei von den drei Schmitt-Triggern 116, 117, 118 gleichzeitig ausfallen müssen, damit die Signalformerschaltung 30 nicht mehr arbeitet. Auch müssen zwei in einem Zweig miteinander in Serie liegende Schalter gleichzeitig einen Kurzschluß aufweisen, so daß sie nicht mehr geöffnet werden können, oder es muß in jedem der drei parallelen Zweige einer Gruppe gleichzeitig ein Schalter so defekt sein, daß er nicht mehr geschlossen werden kann, damit die Signalformerschaltung 30 unbrauchbar wird.

Die eine der beiden Schaltergruppen, nämlich die Gruppe 119, ist zwischen den Ausgangspunkt A der Signalformerschaltung 30 und die Versorgungsspannung $U_V$ geschaltet, während die andere Gruppe 120 zwischen den Ausgangspunkt A und die Masse geschaltet ist. Da bei Verwendung von Feldeffekt-Transistoren als Schalter $S_1$ bis $S_{12}$, die durch ein gemeinsames Signal angesteuert werden, beim Umschalten jeweils ein kurzer Zeitraum auftritt, in dem alle Schalter $S_1$ bis $S_{12}$ geschlossen sind, ist zwischen dem Ausgangspunkt A und der Gruppe 119 ein Strombegrenzungswiderstand 127 und zwischen dem Ausgangspunkt A und der Gruppe 120 ein Strombegrenzungswiderstand 128 vorgesehen. Diese beiden Widerstände 127 und 128 spielen auch für die Anpassung an den Wellenwiderstand des nachfolgenden Leitungsabschnitts eine große Rolle, wie unten noch genauer erläutert wird.

Durch das wechselweise Schließen und Öffnen der Schalter 119 und 120 kann somit der Ausgangspunkt A entweder über den Widerstand 128 an Masse oder über den Widerstand 127 auf $U_v$ gelegt werden, wodurch die am Eingang E ankommenden Impulse reproduziert und in den nächsten Leitungsabschnitt eingespeist werden.

Sollen die am Eingang E ankommenden Impulse mit einer vorgegebenen Verzögerung weitergegeben werden, so kann in jedem der Signalpfade 110, 111, 112 dem Schmitt-Trigger 116, 117 bzw. 118 ein Integrationsglied nachgeschaltet werden, das aus einem seriell im Signalpfad liegenden Widerstand und einem zur Masse führenden Kondensator besteht und dessen flache Ausgangssignalflanken jeweils von einem weiteren Schmitt-Trigger wieder in steile, prellfreie Impulsflanken umgewandelt werden. Die von diesen zweiten Schmitt-Triggern abgegebenen Ausgangsimpulse sind gegenüber dem zugehörigen Eingangsimpuls um die für die drei Signalpfade gleich groß gewählte Zeitkonstante der RC-Glieder verzögert und werden zur Ansteuerung der Schaltergruppen 119 und 120 in der gleichen Weise verwendet, wie dies in Fig. 14 für die Ausgangssignale der Schmitt-Trigger 116, 117, 118 dargestellt ist.

Gegebenenfalls wird die Zeitkonstante der RC-Glieder so groß bemessen, daß nach Erhalt eines Impulses am Eingang E ein entsprechender Impuls am Ausgang A erst dann wieder abgegeben wird, wenn die Anwähleinheit 25, in der die betreffende Impulsformerschaltung 30 angeordnet ist, diesen Impuls verarbeitet hat, d.h. wenn die entsprechenden Schaltvorgänge erfolgt sind und sich die durch diese Schaltvorgänge entladenen Pufferkondensatoren 63, 73, 83 der zu dieser
Gruppe gehörenden Strombegrenzungs- und Pufferschaltungen
32 und der zugehörige Leitungsabschnitt zumindest wieder
so weit aufgeladen haben, daß keine nennenswerten Ladeströme mehr fließen. Dann kann ohne die Gefahr einer Überlastung der Spannungsversorgungsleitung 6 der betreffende
Impuls an die nächste Anwähleinheit 25 weitergegeben werden.

Den beiden Widerständen 127, 128 kommt gemäß der Erfindung
eine ganz besondere Bedeutung zu: Nach dem Stand der Technik ist es nämlich üblich, einen Impuls in eine lange
Leitung direkt einzuspeisen und diese Leitung zur Vermeidung von Reflexionen an ihrem dem Einspeisungsende gegenüberliegenden Ende mit einem ohm'schen Widerstand zur
Masse hin abzuschließen, dessen Größe gleich dem Wellenwiderstand der Leitung ist.

Bei einem Meßsystem der vorliegenden Art besitzt die Kabelader, die die Befehlsleitung 8 bildet, beispielsweise einen
Wellenwiderstand von 60 Ohm oder 75 Ohm und die Impuls-
Scheitelspannung beträgt z.B. 15 V. Bei einer dem Stand
der Technik entsprechenden Einspeisung eines solchen Impulses in die System-Befehlsleitung 8 oder die Gruppen-
Befehlsleitung 8' würde beim Öffnen der Schaltergruppe 120 und
beim gleichzeitigen Schließen der Schaltergruppe 119 ein Strom
von 250 mA bzw. 200 mA in den nächsten Befehlsleitungs-
Abschnitt fließen. Da dieser Leitungsabschnitt eine Länge
von 1 km oder mehr aufweisen kann, würde durch einen derart hohen Strom über die Leitungslänge ein zu großer Spannungsabfall auftreten. Ein reflexionsfreier Leitungsabschluß mit einem dem Wellenwiderstand entsprechenden Abschlußwiderstand ist daher nicht möglich. Schließt man
andererseits die Leitung überhaupt nicht ab, so bildet
sich aufgrund von Mehrfachreflexionen für jeden Impuls eine
mehrfach hin- und herlaufende Welle aus, deren Amplitude
zwar gedämpft ist, die aber dennoch zu völlig undefinierten
Signalverhältnissen führt.

Zur Überwindung dieses Problems werden gemäß der Erfindung
die steigenden Flanken der Impulse in den jeweils nächsten
Befehlsleitungsabschnitt über den seriellen ohm'schen Widerstand 127 und die fallenden Flanken der Impulse über den
seriellen ohm'schen Widerstand 128 eingespeist, deren Größe
jeweils gleich dem Wellenwiderstand der Leitung ist.

Dabei ergibt sich eine genau einmal hin- und einmal zurücklaufende Welle, wie dies im folgenden anhand von Fig. 15 erläutert wird.

In der obersten Zeile von Fig. 15 ist der Verlauf der Steuerspannung dargestellt, die sich beispielsweise am Ausgang des
Schmitt-Triggers 116 (und in gleicher Weise an den Ausgängen
der Schmitt-Trigger 117 und 118) der Signalformerschaltung 30
aus Fig. 14 ergibt, wodurch zum Zeitpunkt $t_0$ die Schaltergruppe 120 geöffnet und gleichzeitig die Schaltergruppe 119
geschlossen wird. Die Steuerspannung springt zu diesem Zeitpunkt $t_0$ vom zuvor vorhandenen Null-Pegel auf eine logische
Eins. Der in der obersten Zeile von Fig. 15 dargestellte
Impuls besitzt eine zeitliche Länge T = 50 /us, d.h. nach
einer Zeit von 50 /us wird die Schaltergruppe 119 wieder geöffnet und gleichzeitig die Schaltergruppe 120 geschlossen,
da die Steuerspannung wieder mit einer sehr steilen Flanke
von log. Eins auf log. Null abfällt.

In der zweiten Zeile von oben ist in Fig. 15 der Spannungsverlauf wiedergegeben, der im Punkt A, d.h. am Ausgang der
Impulsformerschaltung 30 hinter den ohm'schen Serienwiderständen 127, 128 in Antwort auf den in der darüberliegenden
Zeile wiedergegebenen Spannungsverlauf auftritt, wobei die
Effekte weggelassen sind, die dadurch entstehen, daß gegebenenfalls für eine sehr kurze Zeit die Schalter beider Gruppen
119 und 120 geschlossen sein können. Man sieht, daß im Zeitpunkt $t_0$ die Spannung im Punkt A sprungartig auf etwa die
halbe Versorgungsspannung $U_M$ von beispielsweise 15 V, d.h.

im vorliegenden Fall auf ca. 7,5 V ansteigt, da der Serienwiderstand 127 mit dem Wellenwiderstand des nachfolgenden Leitungsabschnittes einen Spannungsteiler im Verhältnis 1 : 1 bildet.

Die Spannung im Punkt A bleibt auf diesem Wert $U_M/2$ so
lange, bis die Welle, die in dem Befehlsleitungsabschnitt
durch das Einspeisen des dargestellten Impulses ausgelöst
worden ist, am gegenüberliegenden Ende des Leitungsabschnittes
reflektiert und wieder zum Einspeisungsende zurückgelaufen
ist. Bei der Darstellung in Fig. 15 ist angenommen, daß der
betrachtete Leitungsabschnitt eine Länge von 1 km besitzt.
In diesem Fall braucht die Welle für einen Hin- und Rücklauf
etwa 10 /us, so daß nach dieser Zeit die Spannung im Punkt A
auf den vollen Wert von 15 V ansteigt.

Ein entsprechender Vorgang spielt sich im Punkt A bei der
fallenden Flanke des betrachteten Impulses ab. In dem Zeitpunkt, in dem die Steuerspannung von log. Eins auf log. Null
abfällt, fällt sie im Punkt A von 15 V wieder nur auf den
halben Wert von $U_M$, d.h. auf 7,5 V ab und bleibt
auf diesem mittleren Niveau wieder für etwa 10 /us, d.h.
so lange, bis der am gegenüberliegenden Ende des Leitungsabschnittes reflektierte Wellenanteil wieder am Einspeisungsende angelangt ist. Dann fällt auch im Punkt A die
Spannung wieder auf das Massepotential von 0 V ab.

Die eben beschriebene Spannungsschulter, die im Punkt A
sowohl in Antwort auf die steigende als auch in Antwort
auf die fallende Flanke eines eingespeisten Impulses auftritt, findet sich mit Ausnahme des dem Einspeisungsende
gegenüberliegenden Endes auch an allen anderen Stellen
des Leitungsabschnittes, besitzt aber jeweils eine andere
zeitliche Länge. Dies ist in der dritten Zeile von oben
der Fig. 15 für die Mitte des betrachteten Leitungsabschnittes dargestellt, die vom Einspeisungsende 500 m

- 66 -

entfernt ist. An dieser Stelle erfolgt zum Zeitpunkt $t_0$ noch keine Reaktion, weil die am Einspeisungspunkt A ausgelöste Welle etwa $2,5 \mu s$ benötigt, um die Entfernung von 500 m zu überwinden. Nach diesen $2,5 \mu s$ steigt dann auch in der Mitte des Leitungsabschnittes die Spannung vom bisher herrschenden Massepotential auf etwa die halbe Versorgungsspannung $U_M$ an. Die hierdurch entstehende Spannungsschulter ist aber nur $5 \mu s$ lang, weil die Welle nur eine Entfernung von 1000 m durchlaufen muß, um von der Mitte des Kabelabschnittes bis zu dem dem Einspeisungsende gegenüberliegenden Ende und von dort wieder zurück zur Mitte des Kabelabschnittes zu gelangen. Dies bedeutet, daß in der Mitte des Kabelabschnittes die Spannung bereits $7,5 \mu s$ nach dem Zeitpunkt $t_0$ auf den vollen Wert ansteigt. Entsprechendes gilt für die fallende Flanke des betrachteten Impulses, wo ebenfalls eine Spannungstufe entsteht, die eine zeitliche Länge von nur $5 \mu s$ besitzt.

In der untersten Zeile von Fig.15 ist der Spannungsverlauf an dem dem Einspeisungsende gegenüberliegenden Ende des Kabelabschnittes dargestellt, das vom Einspeisungsende eine Entfernung von 1000 m besitzt. Man sieht, daß hier nach der Laufzeit von $5 \mu s$ die Spannung in einem einzigen Schritt von 0 V auf 15 V ansteigt und nach $50 \mu s$ ebenso wieder abfällt. Man erhält an diesem Ende also einen Impuls, der dem Impuls der Steuerspannung weitgehend gleicht und gegen diesen um $5 \mu s$ verschoben ist. Handelt es sich bei dem betrachteten Befehlsleitungs-Abschnitt um einen Abschnitt der System-Befehlsleitung 8, so dient dieser in der untersten Zeile von Fig. 15 dargestellte Impuls als Eingangsimpuls für die Impulsformerschaltungen 30 der an dieser Stelle angeordneten Anwähleinheit 25 und er kann von diesen Schaltungen wegen seiner sauberen steilen Flanken ohne weiteres verarbeitet werden.

Aber auch die zwischen den beiden Leitungsabschnitts-Enden
vorhandenen Spannungsstufen in den Impulsflanken bieten
keine besonderen Probleme. Handelt es sich bei dem betrachteten Leitungsabschnitt um eine Gruppen-Befehlsleitung 8',
so weist diese zwar über ihre Gesamtlänge gleichmäßig verteilte Abzweigungen auf, mit denen jeweils die Eingänge
der Steuerschaltungen 14 der zu dieser Gruppe gehörenden
Meßeinheiten 5 an diese Befehlsleitung angeschlossen sind.
An diesen Eingängen werden also keine exakten Rechtecksimpulse empfangen, sondern Impulse, deren steigende und
fallende Flanken die oben beschriebenen Spannungsschultern
aufweisen, die je nach Entfernung der betreffenden Meßeinheit von der zugehörigen Anwähleinheit eine unterschiedliche zeitliche Länge besitzen können. Wie aber oben unter
Bezugnahme insbesondere auf Fig. 7 erläutert wurde, besitzt
jede Steuerschaltung 14 an ihrem mit der Befehlsleitung 8'
in Verbindung stehenden Eingang einen Schmitt-Trigger 36,
dessen Hysterese so gewählt werden kann, daß er für jeden
Eingangsimpuls einen Ausgangsimpuls erzeugt, der keine gestuften Flanken mehr besitzt und dessen zeitliche Länge
gleich der Länge des Impulses ist, der in der vorausgehenden Impulsformerschaltung als Steuerspannung erzeugt wurde. Beispielsweise wird zu diesem Zweck die Spannungsschwelle,
bei der der Schmitt-Trigger 36 auf die steigende Flanke des
Eingangsimpulses reagiert, so gewählt, daß sie höher
als 50 % der Eingangsimpuls-Scheitelspannung ist, während
die Schwelle, bei deren Unterschreiten der Schmitt-Trigger 36
auf die fallende Flanke des Eingangsimpulses reagiert, so
gewählt wird, daß sie unterhalb von 50% der Scheitelspannung
des Eingangsimpulses liegt. Wie man der Fig. 15 ohne weiteres entnimmt, wird dadurch immer erreicht, daß der Ausgangsimpuls des Schmitt-Triggers 36 exakt die gleiche
zeitliche Länge wie der als Steuerspannung dienende Impuls besitzt Im folgenden soll unter Bezugnahme auf Fig. 16 eine Verzögerungsschaltung beschrieben werden, die zwischen dem "0"-Ausgang eines jeden programmierbaren Rückwärtszählers 35 bzw. 35' und dem nachgeordneten Schalter 11 bzw. den nachgeordneten Schaltern der Schaltergruppe 90 bzw. den nachgeordneten Schaltern 28, 28',... und 29, 29', ... eingefügt werden kann. Diese Verzögerungsschaltung umfaßt ein Verzögerungsglied 130, dem die impulsförmigen Ausgangssignale des zugehörigen Rückwärtszählers 35 bzw. 35' zugeführt werden, die es um eine vorgegebene Zeitspanne $\tau_4$ verzögert. Diese verzögerten Impulse werden einem UND-Gatter 131 zugeführt, dessen anderer Eingang die unverzögerten Ausgangssignale des zugehörigen Rückwärtszählers 35 bzw. 35' erhält. Somit verkürzt das UND-Gatter 131 die Ausgangssignale des Rückwärtszählers 35 bzw. 35' um die Zeit $\tau_4$, d.h. diese Ausgangssignale werden vom UND-Gatter 131 völlig unterdrückt, wenn sie kürzer als $\tau_4$ sind. Ein vom UND-Gatter 131 weitergegebener Impuls gelangt über ein ODER-Gatter 132 einerseits an den oder die Schalter 11 bzw. 90 bzw. 28, 28', ... bzw. 29, 29', ... und andererseits an einen zur Verzögerungsschaltung gehörenden Schalter 133, der hierdurch geschlossen wird und eine logische Eins an den einen Eingang eines UND-Gatters 134 legt, an dessen anderem Eingang das Ausgangssignal des Verzögerungsgliedes 130 liegt. Unter der Voraussetzung, daß der Ausgangsimpuls des Rückwärtszählers 35 bzw. 35' länger als $\tau_4$ war, gibt also das UND-Gatter 134 an seinem Ausgang diesen Impuls in voller Länge aber um die Zeit $\tau_4$ verzögert ab. Da der Ausgang des UND-Gatters 134 mit dem zweiten Eingang des ODER-Gatters 132 verbunden ist, hält das ODER-Gatter 132 sowohl die Schalter 11 bzw. 90 bzw. 28, 28', ... bzw. 29, 29', ... als auch den Schalter 133 so lange geschlossen, bis das Ausgangssignal des Verzögerungsgliedes 130 wieder auf logisch Null abgefallen ist.

Wählt man die Folgefreuqenz der vom programmierbaren Rückwärtszähler 35 bzw. 35' zu verarbeitenden Zählimpulse kürzer
als $\tau_4$, so kann mit diesen Impulsen der Rückwärtszähler 35
bzw. 35' über seinen "0"-Zählwert hinwegzählen, ohne daß am
Ausgang des ODER-Gatters 132 ein Ansteuersignal für die nachgeordneten Schalter erscheint. Auf diese Weise ist es möglich,
zur Erzielung eines wahlfreien Zugriffs zu einzelnen Meßeinheiten oder einzelnen Anwähleinheiten außerhalb des Meßzyklus ein Impulspaket über die Befehlsleitungen 8, 8' auszusenden, das dann nur die Schalteranordnung derjenigen Anwähleinheit 25 bzw. derjenigen Meßeinheit 5 zum Ansprechen
bringt, deren einprogrammierter Ausgangs-Zählwert m bzw. n
der Anzahl der in diesem Impulspaket enthaltenen Impulse entspricht.

Andererseits werden bei genügend langsamer Ansteuerung, d.h.
also im Normalfall, die Ausgangssignale des Rückwärtszählers
35 bzw. 35' zwar verzögert aber unverkürzt weitergegeben,
so daß die oben erwähnte Bedingung gewahrt bleibt, gemäß
derer insbesondere bei den Meßeinheiten 5 eine möglichst
lückenlose Ansteuerung gewährleistet sein muß, um eine zu
starke Entladung der Meßleitung 7 zu vermeiden.

0212247

- 1 -

Patentansprüche

1. Meßanordnung mit einer Vielzahl von Meßeinheiten,
   die durch ein Kabel, das zu einer Zentrale führt,
   miteinander und mit der Zentrale verbunden sind und
   von denen jede folgende Bestandteile umfaßt:
   - wenigstens einen Meßfühler, der ein elektrisches
     Ausgangssignal erzeugt, das seinen Wert in Abhängigkeit von einem physikalischen Umgebungsparameter
     ändert,
   - eine Schalteranordnung, durch deren Schließen ein
     Meßsignal, das die Größe des Ausgangssignals des
     Meßfühlers kennzeichnet, der Zentrale zuführbar
     ist, und
   - eine Steuerschaltung, die von der Zentrale her
     ansteuerbar ist, um die Schalteranordnung kurzzeitig zu schließen und dann wieder zu öffnen,

dadurch   g e k e n n z e i c h n e t ,

- daß die Steuerschaltung (14) einer jeden Meßeinheit
  (5; 75) eine programmierbare Adressen-Erkennungsschaltung umfaßt, die durch ein Meßeinheiten-Adressensignal ansteuerbar ist, das von der Zentrale (2)
  ausgesandt wird,
- daß die Vielzahl von Meßeinheiten (5; 75) aus
  wenigstens einer Gruppe von Meßeinheiten (5; 75)
  besteht, für die das Meßeinheiten-Adressensignal
  der n-ten Meßeinheit (5; 75) aus dem Meßeinheiten-
  Adressensignal der (n-1)-ten Meßeinheit (5; 75)
  und einem Zusatzsignal besteht, das dem Meßeinheiten-
  Adressensignal der (n-1)-ten Meßeinheit (5; 75) zeitlich nachfolgt, und
- daß die Steuerschaltungen (14) der Meßeinheiten (5;
  75) der wenigstens einen Gruppe dadurch der Reihe
  nach ansteuerbar sind, daß ihnen von der Zentrale
  (2) her gemeinsam das Meßeinheiten-Adressensignal
  für die Meßeinheit (5; 75) zugeführt wird, die in
  der Gruppe das längste Meßeinheiten-Adressensignal
  aufweist, das somit die Meßeinheiten-Adressensignale
  aller anderen Meßeinheiten (5; 75) der Gruppe umfaßt.

2. Meßanordnung nach Anspruch 1, dadurch  g e k e n n -
   z e i c h n e t , daß die Adressen- Erkennungsschaltungen
   programmierbare Rückwärtszähler (35) sind, von denen
   jeder durch einen Setzimpuls, der den Meßeinheiten (5;
   75) der wenigstens einen Gruppe vor Beginn eines
   Gruppen-Meßzyklus von der Zentrale (2) her gemeinsam
   zugeführt wird, auf einen jeweils einprogrammierten
   Ausgangszählwert gesetzt wird, wobei in die Adressen-Erkennungsschaltung einer jeden Meßeinheit (5; 75) der
   wenigstens einen Gruppe ein anderer Ausgangszählwert
   einprogrammiert ist, und daß das längste Meßeinheiten-
   Adressensignal aus einer Folge von Zählimpulsen besteht, die den Rückwärtszählern (35) der Meßeinheiten (5; 75)
der wenigstens einen Gruppe gemeinsam zugeführt werden, wobei durch die aufeinanderfolgenden Zählimpulse
die Schalteranordnungen (11; 90) der Meßeinheiten (5;
75) der Gruppe nacheinander geschlossen und wieder
geöffnet werden können.

3. Meßanordnung nach Anspruch 2, dadurch g e k e n n -
z e i c h n e t , daß die Setzimpulse und die Zählimpulse den Meßeinheiten (5; 75) auf einer gemeinsamen,
als Befehlsleitung (8; 8') dienenden Ader des Kabels
(1) zugeführt werden, daß die Setzimpulse eine andere
zeitliche Länge besitzen als die Zählimpulse und daß
die Steuerschaltung (14) einer jeden Meßeinheit (5;
75) eine Impulslängen-Diskriminatorschaltung (37,38,
39,40,41) umfaßt, die die Setzimpulse dem Setzeingang
und die Zählimpulse dem Takteingang des Rückwärtszählers (35) zuführt.

4. Meßanordnung nach einem der Ansprüche 1 bis 3, dadurch g e k e n n z e i c h n e t , daß die
nacheinander erzeugten Meßsignale der Meßeinheiten
(5; 75) der Zentrale (2) über eine Ader (7) des Kabels (1) zuführbar sind, die als System-Meßleitung
dient, und daß die Adressensignale den Meßeinheiten
(5; 75) so zugeführt werden, daß in die Meßleitung
(7) gleichzeitig immer nur ein Meßsignal eingespeist
wird und daß die Zeiträume zwischen zwei unmittelbar nacheinander erfolgenden Meßsignal-Einspeisungen
möglichst kurz sind.

5. Meßanordnung nach einem der Ansprüche 1 bis 4, dadurch
g e k e n n z e i c h n e t , daß die Vielzahl von
Meßeinheiten (5; 75) mehrere Gruppen (23,24;16 bis 22) von
Meßeinheiten (5; 75) umfaßt und daß wenigstens einigen dieser Gruppen (24;16 bis 22) jeweils eine Anwähleinheit primär zugeordnet ist, die durch das Kabel (1) mit der Zentrale (2), mit den Meßeinheiten (5; 75) und den übrigen Anwähleinheiten (25) verbunden ist, und daß die Anwähleinheiten (25) von der Zentrale (2) her so einzeln aktivierbar sind, daß die von der Zentrale (2) abgegebenen Meßeinheiten-Adressensignale nur an die Meßeinheiten (5; 75) derjenigen Gruppe (24; 16 bis 22) gelangen, die der aktivierten Anwähleinheit (25) primär zugeordnet ist.

6. Meßanordnung nach Anspruch 5, dadurch  g e k e n n -
   z e i c h n e t , daß wenigstens einer Gruppe (16 bis 22) eine zweite Anwähleinheit (25) sekundär zugeordnet ist, die gleichzeitig einer anderen Gruppe (16 bis 22) primär zugeordnet ist, und daß diese Anwähleinheit (25) von der Zentrale (2) her alternativ so einzeln aktivierbar ist, daß die von der Zentrale (2) abgegebenen Meßeinheiten-Adressensignale entweder nur an die Meßeinheiten (5; 75) der Gruppe (16 bis 22) gelangen, die der Anwähleinheit (25) primär zugeordnet ist, oder nur an die Meßeinheiten (5; 75) der Gruppe (16 bis 22), die der Anwähleinheit (25) sekundär zugeordnet ist.

7. Meßanordnung nach Anspruch 5 oder 6, dadurch  g e -
   k e n n z e i c h n e t , daß jede Anwähleinheit (25) folgende Bestandteile umfaßt:
   - wenigstens einen Schalter (28), der im aktivierten Zustand der Anwähleinheit (25) geschlossen ist und dabei einen Aderabschnitt (8')des Kabels (1), der als Gruppen-Befehlsleitung dient und auf dem den Meßeinheiten (5; 75) der primär zugeordneten Gruppe (16 bis 22) die Meßeinheiten-Adressensignale zuführbar sind, mit einer durchgehenden Ader (8) des

- 5 -                                                    0212247

Kabels (1) verbindet, die die Zentrale (2) mit allen
Anwähleinheiten (25) verbindet und als System-
Befehlsleitung dient, und
- eine Steuerschaltung (14') für den wenigstens einen
Schalter (28), die eine programmierbare Adressen-Erkennungsschaltung aufweist, durch die nach dem Erkennen
des zugehörigen Gruppen-Adressensignals der Schalter
(28) geschlossen und wieder geöffnet werden kann.

8. Meßanordnung nach Anspruch 7, dadurch g e k e n n -
z e i c h n e t , daß das Gruppen-Adressensignal der
m-ten Anwähleinheit (25) aus dem Gruppen-Adressensignal
der (m-1)-ten Anwähleinheit (25) und einem Zusatzsignal
besteht, das dem Gruppen-Adressensignal der (m-1)-ten Anwähleinheit (25) zeitlich nachfolgt, und daß die
Anwähleinheiten (25) dadurch der Reihe nach einzeln
aktivierbar sind, daß ihnen von der Zentrale (2) her
gemeinsam das Gruppen-Adressensignal für die Anwähleinheit (25) zugeführt wird, die das längste Gruppen-
Adressensignal aufweist und das somit die Gruppen-
Adressensignale aller anderen Anwähleinheiten (25)
umfaßt.

9. Meßanordnung nach Anspruch 8, dadurch g e k e n n -
z e i c h n e t , daß die Adressen-Erkennungsschaltungen
der Anwähleinheiten (25) programmierbare Rückwärtszähler (35') sind, von denen jeder durch einen Setzimpuls, der den Anwähleinheiten (25) vor Beginn eines
System-Meßzykluses von der Zentrale (2) her gemeinsam
zugeführt wird, auf einen jeweils einprogrammierten
Ausgangszählwert gesetzt wird, wobei in die Adressen-Erkennungsschaltung einer jeden Anwähleinheit (25)
ein anderer Ausgangszählwert einprogrammiert ist, und
daß das längste Gruppen-Adressensignal aus einer Folge
von Zählimpulsen besteht, die den Rückwärtszählern (35')
aller Anwähleinheiten (25) gemeinsam zugeführt werden,
wobei durch die aufeinander folgenden Zählimpulse die

- 6 -                    0212247

Schalter (28) der Anwähleinheiten (25) nacheinander
geschlossen und wieder geöffnet werden können.

10. Meßanordnung nach einem der Ansprüche 6 bis 9,
    dadurch  g e k e n n z e i c h n e t ,  daß jede
    Anwähleinheit (25), die einer Gruppe von Meßeinheiten (5; 75) primär und einer weiteren Gruppe von
    Meßeinheiten sekundär zugeordnet ist, folgende Bestandteile umfaßt:
    - eine Steuerschaltung (14'), die eine programmierbare Adressen- Erkennungsschaltung aufweist, die beim Erkennen  eines ersten Anwähleinheiten-Adressensignals
      ein erstes Steuersignal und beim Erkennen eines zweiten Anwähleinheiten-Adressensignals ein zweites
      Steuersignal erzeugt,
    - wenigstens einen ersten Schalter (28), der durch
      das erste Steuersignal geschlossen und wieder geöffnet wird und im geschlossenen Zustand einen
      Aderabschnitt (8') des Kabels (1), der als Gruppen-
      befehlsleitung dient und auf dem den Meßeinheiten
      (5; 75) der primär zugeordneten Gruppe die Meßeinheiten-Adressensignale zuführbar sind, mit einer
      durchgehenden Ader (8) des Kabels (1) verbindet,
      die die Zentrale (2) mit allen Anwähleinheiten (25)
      verbindet und als System-Befehlsleitung dient,
      und
    - wenigstens einen zweiten Schalter (29), der durch
      das zweite Steuersignal geschlossen und wieder geöffnet wird und im geschlossenen Zustand einen Aderabschnitt (8') des Kabels (1), der als Gruppen-
      Befehlsleitung dient und auf dem den Meßeinheiten
      (5; 75) der sekundär zugeordneten Gruppe die Meßeinheiten-Adressensignale zuführbar sind, mit der
      durchgehenden, als System-Befehlsleitung dienenden
      Ader (8) des Kabels (1) verbindet.

11. Meßanordnung nach Anspruch 10, dadurch  g e -
k e n n z e i c h n e t , daß die Adressen-Erkennungsschaltung zwei programmierbare Rückwärtszähler umfaßt, die durch einen Setzimpuls, der den Anwähleinheiten (25) vor Beginn eines System-Meßzykluses von
der Zentrale (2) her gemeinsam zugeführt wird, auf
zwei verschiedene einprogrammierte Ausgangszählwerte
gesetzt werden, wobei diese Ausgangszählwerte für
alle Anwähleinheiten verschieden sind, daß den beiden
Rückwärtszählern die Anwähleinheiten-Adressensignale
in Form von Zählimpulsen zugeführt werden, und daß
der eine der beiden Rückwärtszähler beim Erreichen
des Zählerstandes "Null" das erste Steuersignal und
der andere Rückwärtszähler beim Erreichen des Zählerstandes "Null" das zweite Steuersignal abgibt.

12. Meßanordnung nach Anspruch 9 oder 11, dadurch  g e k e n n -
z e i c h n e t , daß die Setzimpulse und die Zählimpulse für die Steuerschaltungen (14') der Anwähleinheiten (25) den Anwähleinheiten (25) auf einer gemeinsamen
Ader (8 ) des Kabels (1) zugeführt werden, daß die Setzimpulse für die Anwähleinheiten (25) eine andere zeitliche Länge besitzen als die Zählimpulse für die Anwähleinheiten (25), und daß die Steuerschaltung (14') einer
jeden Anwähleinheit (25) eine Impulslängen-Diskriminatorschaltung (37', 38', 39', 40', 41') umfaßt, die die
Setzimpulse dem Setzeingang und die Zählimpulse dem
Takteingang des Rückwärtszählers (35') zuführt.

13. Meßanordnung nach Anspruch 12, dadurch  g e k e n n -
z e i c h n e t , daß den Anwähleinheiten (25) die
Setz- und Zählimpulse für die Anwähleinheiten auf
der Befehlsleitung (8 ) des Kabels (1) zugeführt
werden, auf der die Zentrale (2) auch die Setz- und
Zählimpulse für die Meßeinheiten (5; 75) abgibt, daß
die Setz- und Zählimpulse für die Anwähleinheiten (25) eine andere zeitliche Länge besitzen als die Setz- und
Zählimpulse für die Meßeinheiten (5; 75) und daß der
Impulslängen-Diskriminatorschaltung (37', 38', 39',
40', 41') einer jeden Anwähleinheit (25) eine Zusatzschaltung (44, 45) zur Unterdrückung der Setz- und Zählimpulse für die Meßeinheiten (5; 75) zugeordnet ist.

14. Meßanordnung nach Anspruch 13, dadurch g e k e n n -
z e i c h n e t , daß die Setzimpulse für die Meßeinheiten (5; 75) länger als die Zählimpulse für die
Meßeinheiten, die Zählimpulse für die Anwähleinheiten
(25) länger als die Setzimpulse für die Meßeinheiten
(5; 75) und die Setzimpulse für die Anwähleinheiten
(25) länger als die Zählimpulse für die Anwähleinheiten
sind.

15. Meßanordnung nach einem der Ansprüche 5 bis 14,
dadurch g e k e n n z e i c h n e t, daß jede Anwähleinheit (25) einen zweiten Schalter (28') umfaßt, der
von der Steuerschaltung (14') gleichzeitig mit dem
wenigstens einen Schalter (28) betätigt wird und der
im aktivierten Zustand der Anwähleinheit (25) über
eine durchgehende Ader (6) des Kabels (1), die als
Spannungsversorgungsleitung dient, den Stromversorgungskreis für die Meßeinheiten (5) der primär zugeordneten
Gruppe (16 bis 22) schließt.

16. Meßanordnung nach einem der Ansprüche 14 oder 15,
dadurch g e k e n n z e i c h n e t , daß jede
Anwähleinheit (25) einen weiteren Schalter umfaßt,
der von der Steuerschaltung (14') gleichzeitig mit
dem wenigstens einen Schalter (28) betätigt wird, und der im aktivierten Zustand der Anwähleinheit (25)
einen Aderabschnitt, der die Meßsignale der Meßeinheiten (5; 75) der primär zugeordneten Gruppe (16 bis
22) aufnimmt und somit als Gruppen-Meßleitung dient,
mit einer durchgehenden Ader des Kabels (1) verbindet,
die als System-Meßleitung dient.

17. Meßanordnung nach einem der vorhergehenden Ansprüche,
dadurch g e k e n n z e i c h n e t , daß in wenigstens
einer Meßeinheit (5) eine Speichereinrichtung (26) vorgesehen ist, durch die eine kurzzeitige, vom Meßfühler
(10) erfaßte Änderung des überwachten Umgebungsparameters
zumindest bis zur nächsten Abfrage der Meßeinheit (5)
speicherbar ist, und daß das Ausgangssignal der Speichereinrichtung (26) durch das Schließen der Schalteranordnung
(11) als Meßsignal an die Zentrale (2) übertragbar ist.

18. Meßanordnung nach einem der Ansprüche 1 bis 17,
dadurch g e k e n n z e i c h n e t , daß der Meßfühler (10) wenigstens einer Meßeinheit (5) eine
Stromquelle ist, die bei angelegter Versorgungsspannung einen Einprägestrom liefert, dessen Größe
von dem physikalischen Umgebungsparameter, insbesondere der Temperatur abhängt, daß der den Einprägestrom abgebende Anschluß des Meßfühlers (10)
ständig mit der Meßleitung (7) verbunden ist,
so daß ein Einprägestrom als Meßsignal der Zentrale
(2) zuführbar ist, und daß der Spannungsversorgungsanschluß des Meßfühlers (10) vermittels der
Schalteranordnung (11) der Meßeinheit (5) mit einer
Ader (6, 6') des Kabels (1) verbindbar ist, über die
von der Zentrale (2) her an den Meßfühler (10) eine
Versorgungsspannung angelegt werden kann.

0212247

19. Meßanordnung nach einem der Ansprüche 1 bis 17, dadurch g e k e n n z e i c h n e t , daß dem Meßfühler (10) wenigstens einer Meßeinheit (5) ein Spannungs/Frequenz- Umsetzer nachgeschaltet ist, dessen Ausgangssignal bei geschlossener Schalteranordnung (11) der Zentrale (2) über die Meßleitung (7) als Meßsignal zuführbar ist.

20. Meßanordnung mit einer Vielzahl von Meßeinheiten, die durch ein Kabel, das zu einer Zentrale führt, miteinander und mit der Zentrale verbunden sind und von denen jede folgende Bestanteile umfaßt: wenigstens einen Meßfühler, der ein elektrisches Ausgangssignal erzeugt, das seinen Wert in Abhängigkeit von einem physikalischen Umgebungsparameter ändert, eine Schalteranordnung, durch deren Schließen ein Meßsignal, das die Größe des Ausgangssignals des Meßfühlers kennzeichnet, der Zentrale zuführbar ist, und eine Steuerschaltung, die von der Zentrale her ansteuerbar ist, um die Schalteranordnung kurzzeitig zu  schließen und dann wieder zu öffnen, insbesondere nach einem der Ansprüche 1 bis 17, dadurch g e k e n n z e i c h n e t , daß der Meßfühler (10) wenigstens einer Meßeinheit (5) eine Stromquelle ist, die bei angelegter Versorgungsspannung einen Einprägestrom liefert, dessen Größe von dem physikalischen Umgebungsparameter, insbesondere der Temperatur abhängt, daß der den Einprägestrom abgebende Anschluß des Meßfühlers (10) ständig mit der Meßleitung (7) verbunden ist, so daß ein Einprägestrom als Meßsignal der Zentrale (2) zuführbar ist, und daß der Spannungsversorgungsanschluß des Meßfühlers (10) vermittels der Schalteranordnung (11) der Meßeinheit (5) mit einer Ader (6, 6') des Kabels (1) verbindbar ist, über die von der Zentrale (2) her an den Meßfühler (10) eine Versorgungsspannung angelegt werden kann.

21. Meßanordnung nach einem der Ansprüche 18 oder 20, dadurch g e k e n n z e i c h n e t , daß die den jeweiligen eingeprägten Strom zur Zentrale (2) zurückführende Meßleitung (7 ) in der Zentrale (2) über einen Meßwiderstand (50) an ein Referenzpotential ($U_{Ref}$) gelegt ist, daß zur Messung und Verstärkung der Spannung, die am Meßwiderstand (50) aufgrund eines jeweils eingeprägten Stromes abfällt, ein Differenzverstärker (52) mit hoher Gleichtaktunterdrückung vorgesehen ist, dessen einer Eingang ("+") galvanisch mit dem Ende der Meßleitung (7 ) und über den Meßwiderstand (50) mit dem Referenzpotential ($U_{Ref}$) verbunden ist, daß zum Meßwiderstand ein erster Kondensator (56) und ein damit in Reihe geschalteter erster ohm'scher Widerstand (57) parallelgeschaltet sind, daß der andere Eingang ("-") des Differenzverstärkers (52) über einen zweiten Kondensator (55) mit dem Ende der Meßleitung (7 ) und über einen zweiten ohm'schen Widerstand (54) mit dem Referenzpotential ($U_{Ref}$) verbunden ist, wobei die Größen der beiden Kondensatoren (55,56)  und der beiden ohm'schen Widerstände (54, 57) so gewählt sind, daß der komplexe Widerstand eines ersten RC-Gliedes, das vom ersten Kondensator (56) und vom ersten ohm'schen Widerstand (57) gebildet wird, gleich dem komplexen Widerstand eines zweiten RC-Gliedes, das vom zweiten Kondensator (55) und vom zweiten ohm'schen Widerstand (54) gebildet wird, und  daß die ohm'schen Widerstände (54, 57) jeweils gleich dem Wellenwiderstand der Meßleitung (7) sind.

22. Meßanordnung nach einem der Ansprüche 18 oder 21, dadurch g e k e n n z e i c h n e t , daß die Schalteranordnungen (11) der Meßeinheiten (5) von Halbleiterschaltern gebildet sind, und daß die Verbindungsleitung zwischen dem Spannungsversorgungsanschluß        des Meßfühlers (10) und der Schalteranordnung (11) über eine weitere Schalteranordnung (15),
die von der Steuerschaltung (14) im Gegentakt zur
ersten Schalteranordnung (11) angesteuert wird, mit
dem Meßeinheiten-Massepotential verbindbar ist.

23. Meßanordnung nach Anspruch 21 und 22, dadurch g e -
    k e n n z e i c h n e t , daß zwischen dem Referenz-
    Potential ($U_{Ref}$) und dem Nullpotential, das in der
    Zentrale (2) vorhanden ist, eine Spannungsdifferenz
    vorgegeben ist, die größer als der maximal zugelassene
    Spannungsabfall ist, der zwischen dem Nullpotential
    in der Zentrale (2) und dem Meßeinheiten-Massepotential
    einer beliebigen Meßeinheit (10) auftreten kann.

24. Meßanordnung nach Anspruch 23, dadurch g e k e n n -
    z e i c h n e t , daß in jeder Meßeinheit (5) in
    dem Strompfad von der Schalteranorndung (11) über
    den Meßfühler (10) zur Meßleitung (7) wenigstens eine
    Diode (13) vorgesehen ist, die bei kurzgeschlossenem
    Meßfühler (10) ein Abfließen der Meßströme anderer
    Meßfühler (10) zum Meßstellen-Massepotential verhindert.

25. Meßanordnung nach einem der vorhergehenden Ansprüche,
    dadurch g e k e n n z e i c h n e t , daß die
    Stromversorgung einer jeden Meßeinheit (5; 75) und/
    oder die Stromversorgung einer jeden Anwähleinheit (25)
    über eine Strombegrenzungs- und Pufferschaltung (32)
    erfolgt.

26. Meßanordnung mit einer Vielzahl von Meßeinheiten,
    die durch ein Kabel, das zu einer Zentrale führt,
    miteinander und mit der Zentrale verbunden sind und
    von denen jede folgende Bestandteile umfaßt: wenigstens
    einen Meßfühler, der ein elektrisches Ausgangssignal erzeugt, das seinen Wert in Abhängigkeit von einem physikalischen Umgebungsparameter ändert, eine Schalteranordnung, durch deren Schließen ein Meßsignal, das die Größe des Ausgangssignals des Meßfühlers kennzeichnet, der Zentrale zuführbar ist, und eine Steuerschaltung, die von der Zentrale her ansteuerbar ist, um die Schalteranordnung kurzzeitig zu schließen und dann wieder zu öffnen, insbesondere nach einem der Ansprüche 1 bis 24, dadurch g e k e n n z e i c h n e t , daß die Stromversorgung einer jeden Meßeinheit (5; 75) und/oder die Stromversorgung einer jeden Anwähleinheit (25) über eine Strombegrenzungs- und Pufferschaltung (32) erfolgt.

27. Meßanordnung nach einem der Ansprüche 25 oder 26, dadurch g e k e n n z e i c h n e t , daß die Strombegrenzungs- und Pufferschaltung (32) wenigstens einen Zweig (60) umfaßt, der aus einer Strombegrenzungsdiode (61), einem Strombegrenzungswiderstand (62) und einem Pufferkondensator (63) besteht, die miteinander in Reihe geschaltet sind, und der mit der Anode der Strombegrenzungsdiode (61) an die Spannungsversorgungsleitung (6; 6') und mit dem freien Anschluß des Pufferkondensators (63) an die Masseleitung (9) gelegt ist, und daß die Versorgungsspannung ($U_V$) für die zugehörige Schaltung zwischen dem Strombegrenzungswiderstand (62) und dem Pufferkondensator (63) abgegriffen ist.

28. Meßanordnung nach Anspruch 27, dadurch g e k e n n z e i c h n e t , daß die Strombegrenzungs- und Pufferschaltung (32) zwei zueinander parallel liegende Zweige (60,70) umfaßt, von denen jeder aus einer Strombegrenzungsdiode (61,71), einem Strombegrenzungswiderstand (62,72) und einem Pufferkondensator (63,73) besteht,
die jeweils miteinander in Reihe geschaltet sind,
und daß zwischen die beiden Verbindungspunkte (68,78)
zwischen den Strombegrenzungswiderständen (62,72)
und den beiden Pufferkondensatoren (63,73) zwei miteinander in Serie und gegeneinander geschaltete Dioden (64,74) geschaltet sind, zwischen denen die Versorgungsspannung ($U_V$) für die zu versorgende Schaltung
abgegriffen ist.

29. Meßanordnung nach Anspruch 27, dadurch  g e k e n n -
z e i c h n e t ,  daß die Strombegrenzungs- und
Pufferschaltung (32) drei zueinander parallel liegende
Zweige (60,70,80) umfaßt, von denen jeder aus einer
Strombegrenzungsdiode (61,71,81), einem Strombegrenzungswiderstand (62,72,82) und einem Pufferkondensator (63,
73,83) besteht, die jeweils miteinander in Reihe geschaltet sind, und daß die drei Zweige (60,70,80) in
der Weise miteinander vermascht sind, daß zwischen die
Verbindungspunkte (68,78) der Strombegrenzungswiderstände (62,72) und der Pufferkondensatoren (63,73) des
ersten (60) und zweiten (70) Zweiges ein erstes Paar
von einander entgegengerichteten, miteinander in Reihe liegenden Dioden (64,74) geschaltet ist, daß zwischen die Verbindungspunkte (78,88) der Strombegrenzungswiderstände (72,82) und der Pufferkondensatoren
(73,83) des zweiten (70) und dritten (80) Zweiges
ein zweites Paar von einander entgegengerichteten,
miteinander in Reihe liegenden Dioden (76,86) geschaltet ist, daß zwischen die Verbindungspunkte (68,88)
der Strombegrenzungswiderstände (62,82) und der Pufferkondensatoren (63,83) des ersten (60) und dritten (80)
Zweiges ein drittes Paar von einander entgegengerichteten, miteinander in Reihe liegenden Dioden (67,77)

0212247

- 15 -

geschaltet ist, und daß am Verbindungspunkt zwischen
den Dioden (64,74; 76,86; 67,77) eines jeden Paares
jeweils eine Versorgungsspannung für eine mit Spannung
zu versorgende Schaltung abgegriffen ist.

30. Meßanordnung nach Anspruch 29, dadurch    g e k e n n -
z e i c h n e t , daß jede der drei an den Diodenpaaren abgegriffenen Versorgungsspannungen einer
Steuerschaltung $(14_1, 14_2, 14_3)$ zugeführt ist, daß
die drei Steuerschaltungen $(14_1, 14_2, 14_3)$ Adressen-Erkennungsschaltungen aufweisen, die auf die gleiche
Adresse programmiert sind, und daß die Steuerschaltungen $(14_1, 14_2, 14_3)$ gleichzeitig jeweils wenigstens
einen Schalter (91,93; 92,95; 94,96) einer Schalteranordnung (90) betätigen.

31. Meßanordnung nach Anspruch 30, dadurch    g e k e n n -
z e i c h n e t , daß die Strombegrenzungs- und Pufferschaltung (32) mit den drei parallelen Zweigen (60,
70,80) und die drei Steuerschaltungen $(14_1, 14_2, 14_3)$
in einer Meßeinheit (75) angeordnet sind, daß die
Schalteranordnung (90) zum Ein- und Ausschalten eines
Meßfühlers (10) dient und daß drei funktional zueinander parallele, voneinander unabhängige Spannungsversorgungswege (104,105,106) für den Meßfühler (10) vorgesehen sind, in denen jeweils wenigstens ein Schalter
der Schaltergruppe (90) liegt, und die hinter den
Schaltern und vor dem Meßfühler (10) durch drei Entkopplungsdioden (97,98,99) miteinander verbunden sind.

32. Meßanordnung nach Anspruch 31, dadurch    g e k e n n -
z e i c h n e t , daß jeder der drei Spannungsversorgungswege (104,105,106) an einen der drei Verbindungspunkte (68,78,88) zwischen den Strombegrenzungswiderständen (62,72,82) und den Pufferkondensatoren (63,73,83) der drei Zweige (60,70,80) der Strombegrenzungs- und Pufferschaltung (32) angeschlossen ist.

33. Meßanordnung nach Anspruch 32 , dadurch  g e k e n n -
z e i c h n e t , daß jeder der drei Spannungsversorungswege (104,105,106) zwei miteinander in Reihe
liegende Schalter (91,92; 93,94; 95,96) umfaßt, die
jeweils von zwei verschiedenen der drei Steuereinheiten ($14_1$, $14_2$, $14_3$) angesteuert werden, und daß jeder
der drei Spannungsversorgungswege (104,105,106) an den
Verbindungspunkt (68,78,88) desjenigen Zweiges (60,
70,80) angeschlossen ist, der zur Spannungsversorgung
derjenigen zwei Steuerschaltungen ($14_1$, $14_2$; $14_1$, $14_3$;
$14_2$, $14_3$) beiträgt, die die in diesem Spannungsversorgungsweg (104,105,106) liegenden Schalter (91,92;
93,94; 95,96) betätigen.

34. Meßanordnung nach einem der Ansprüche 29 bis 33 , dadurch  g e k e n n z e i c h n e t , daß zwischen
jedem Versorgungsspannungsausgang einer Strombegrenzungs- und Pufferschaltung (32) und den von diesem
Ausgang mit Spannung zu versorgenden Schaltungen ein
Gleichspannungswandler (33) angeordnet ist, der die
von der Strombegrenzungs- und Pufferschaltung (32) abgegebene Gleichspannung ($U_V$) auf eine wesentlich kleinere Gleichspannung ($U_{VV}$) für die mit Spannung zu versorgenden Schaltungen herabsetzt, und daß beim Schließen
der Schalteranordnung (11; 90) an den Meßfühler (10)
die von der Strombegrenzungs- und Pufferschaltung (32)
abgegebene größere Spannung ($U_V$) angelegt wird.

35. Meßanordnung nach Anspruch 29 oder 30 , dadurch  g e -
k e n n z e i c h n e t , daß die Strombegrenzungs-
und Pufferschaltung (32) mit den drei parallelen Zweigen (60,70,80) und die drei Steuerschaltungen ($14_1$,
$14_2$, $14_3$) in einer Anwähleinheit (25) angeordnet sind und daß für jede zu schaltende Gruppen-Leitung (6',
7',8') eine aus jeweils mehreren Schaltern bestehende
Schalteranordnung vorgesehen ist.

36. Meßanordnung nach einem der Ansprüche 4 bis 35, dadurch gekennzeichnet, daß in jeder
Anwähleinheit (25) eine Signalformerschaltung (30)
vorgesehen ist, welche die über die vorausgehende
Anwähleinheit (25) von der Zentrale (2) kommenden
Adressensignale regeneriert und in den zur
nachfolgenden Anwähleinheit (25) führenden Abschnitt
der System-Befehlsleitung (8) einspeist.

37. Meßanordnung mit einer Vielzahl von Meßeinheiten, die
durch ein Kabel, das zu einer Zentrale führt, miteinander und mit der Zentrale verbunden sind und von denen jede folgende Bestandteile umfaßt: wenigstens einen Meßfühler, der ein elektrisches Ausgangssignal
erzeugt, das seinen Wert in Abhängigkeit von einem
physikalischen Umgebungsparameter ändert, eine Schalteranordnung, durch deren Schließen ein Meßsignal,
das die Größe des Ausgangssignals des Meßfühlers kennzeichnet, der Zentrale zuführbar ist, und eine Steuerschaltung, die von der Zentrale her ansteuerbar ist,
um die Schalteranordnung kurzzeitig zu schließen und
dann wieder zu öffnen, insbesondere nach einem der
Ansprüche 4 bis 35, dadurch gekennzeichnet, daß in jeder Anwähleinheit (25) eine Signalformerschaltung (30) vorgesehen ist, welche die über
die vorausgehende Anwähleinheit (25) von der Zentrale
(2) kommenden Adressensignale regeneriert und
in den zur nachfolgenden Anwähleinheit (25) führenden Abschnitt der System-Befehlsleitung (8) einspeist.

38. Meßanordnung nach Anspruch 36 oder 37, dadurch g e - k e n n z e i c h n e t , daß in jeder Anwähleinheit (25) eine zweite Signalformerschaltung (30) vorgesehen ist, welche die über die vorausgehende Anwähleinheit (25) von der Zentrale (2) kommenden Meßeinheiten- Adressensignale regeneriert und bei geschlossener Schalteranordnung (28; 29) in die Gruppen-Befehlsleitung (8') der primär oder sekundär zugeordneten Gruppen einspeist.

39. Meßanordnung nach einem der Ansprüche 36 bis 38, da- durch g e k e n n z e i c h n e t , daß die Signal- formerschaltung (30) eine Impulsformerschaltung ist, die wenigstens einen Zweig umfaßt, der aus einem dem Signaleingang (E) nachgeschalteten Serienwiderstand (113) zur Begrenzung des Eingangsstromes und einem Schmitt-Trigger (116) besteht.

40. Meßanordnung nach Anspruch 39, dadurch g e k e n n - z e i c h n e t , daß der Ausgang des Schmitt-Triggers (116) wenigstens zwei Schalter ($S_6$, $S_{11}$) im Gegentakt so ansteuert, daß immer einer der beiden Schalter ($S_6$, $S_{11}$) geschlossen und gleichzeitig der jeweils andere Schalter geöffnet ist, daß durch den einen Schalter ($S_6$) das eine Ende eines Widerstandes (127) mit der Versorgungsspannung ($U_V$) verbindbar ist, dessen anderes Ende mit einem Widerstand (128) verbunden ist, dessen zweites Ende durch den anderen Schalter ($S_{11}$) mit Masse verbindbar ist, und daß das Ausgangssignal der Signalformerschaltung (30) zwischen den beiden Widerständen (127, 128) abgegriffen wird.

41. Meßanordnung nach Anspruch 39, dadurch g e k e n n - z e i c h n e t , daß mehrere solcher Zweige parallelgeschaltet sind.

42. Meßanordnung nach Anspruch 41, dadurch g e k e n n - z e i c h n e t , daß die Schmitt-Trigger (116, 117, 118) der parallelgeschalteten Zweige (110, 111, 112) eine Vielzahl von Schaltern ($S_1$ bis $S_{12}$) im Gegentakt ansteuern, die gruppenweise miteinander in Reihe und zueinander parallelgeschlatet sind, daß durch die eine Gruppe (119) von gemeinsam schließbaren Schaltern ($S_1$ bis $S_6$) das eine Ende eines Widerstandes (127) mit der Versorgungsspannung ($U_V$) verbindbar ist, dessen anderes Ende mit einem Widerstand (128) verbunden ist, dessen zweites Ende durch die andere Gruppe (120) von gemeinsam schließbaren Schaltern ($S_7$ bis $S_{12}$) mit Masse verbindbar ist, und daß das Ausgangssignal der Signalformerschaltung (30) zwischen den beiden Widerständen (127, 128) abgreifbar ist.

43. Meßanordnung nach Anspruch 40 oder 42, dadurch g e - k e n n z e i c h n e t , daß der Wert eines jeden der beiden Widerstände (127, 128) gleich dem Wellenwiderstand des nachfolgenden Abschnittes der Befehlsleitung (8) ist, und daß der Abschnitt der Befehlsleitung (8) an seinem dem Einspeisungsende gegenüberliegenden Ende mit einem Widerstand abgeschlossen ist, dessen Wert wesentlich größer als der Wellenwiderstand des Leitungsabschnittes ist.

44. Meßanordnung nach einem der vorhergehenden Ansprüche, dadurch g e k e n n z e i c h n e t , daß in jeder Anwähleinheit (25) und jeder Meßeinheit (5; 75) zwischen der Steuerschaltung (14; 14') und der von ihr angesteuerten Schalteranordnung (11; 90; 28,28' ...; 29, 29',...) eine Verzögerungsschaltung (130,131,132,133,134) vorgesehen ist, die das Ansprechen der Schalteranordnung (11; 90; 28,28',...; 29,29',...) nach Empfang des zugehörigen Adressensignals um eine vorgegebene Zeitspanne ($\tau_4$) verzögert.

45. Meßanordnung nach einem der vorhergehenden Ansprüche,
    dadurch g e k e n n z e i c h n e t , daß zwi-
    schen dem Signaleingang der Steuerschaltung (14,14') bzw.
    der Signalformerschaltung (30), der mit der Befehlsleitung (8,8') verbunden ist, und den nachfolgenden,
    über den Signaleingang angesteuerten Schaltungsteilen
    (36; 36'; 116,117,118) jeweils ein Strombegrenzungswiderstand (34; 34'; 113,114,115) vorgesehen ist.

# FIG. 1

# FIG. 2

0212247

FIG. 3

# FIG. 4

# FIG. 5

0212247

FIG. 6

4/10

0212247

FIG. 7

FIG. 8

5/10

0212247

FIG. 9

6/10

0212247

FIG. 10

7/10

0212247

FIG. 12

FIG. 11

0212247

# FIG. 13

FIG. 14

FIG. 15

FIG. 16